# EUROPÄISCHE PATENTSCHRIFT

(11) **EP 3 394 139 B1**
(45) Veröffentlichungstag und Bekanntmachung des Hinweises auf die Patenterteilung: **20.07.2022**
(21) Anmeldenummer: 16826721.9
(22) Anmeldetag: 20.12.2016
(51) Int. Cl.: C08G 18/48, C09J 175/04, C08G 18/32, C09D 175/04, C08G 18/22, C08G 18/12, C08G 18/10, C08G 18/76, C08G 18/75, C09K 3/10

(54) **POLYURETHANZUSAMMENSETZUNG MIT GERINGER WEICHMACHERMIGRATION**
POLYURETHANE COMPOSITION WITH LOW PLASTICIZER MIGRATION
COMPOSITION DE POLYURETHANE A MIGRATION DE PLASTIFIANT REDUITE

(30) Priorität: 21.12.2015 EP 15201652
(43) Veröffentlichungstag der Anmeldung: 31.10.2018
(73) Patentinhaber: Sika Technology AG, 6340 Baar (CH)
(72) Erfinder: BURCKHARDT, Urs, 8049 Zürich (CH); KRAMER, Andreas, 8006 Zürich (CH)
(74) Vertreter: Sika Patent Attorneys
(86) Internationale Anmeldenummer: PCT/EP2016/081990
(87) Internationale Veröffentlichungsnummer: WO 2017/108834

(56) Entgegenhaltungen:
- EP-A1- 0 947 529
- EP-A1- 1 173 411
- EP-A1- 2 857 378
- WO-A1-2008/116900

## Beschreibung

### Technisches Gebiet

Die Erfindung betrifft elastische Klebstoffe, Dichtstoffe und Beschichtungen auf Polyurethan-Basis.

### Stand der Technik

Polyurethan-Zusammensetzungen, welche durch Reaktion von Isocyanatgruppen mit Feuchtigkeit bzw. Wasser vernetzen und dabei zu Elastomeren aushärten, werden insbesondere als Klebstoffe, Dichtstoffe oder Beschichtungen in der Bau- und Fertigungsindustrie eingesetzt, beispielsweise zur Bauteilverklebung in der Montage, zur Verfüllung von Fugen, als Bodenbeschichtung oder als Dachabdichtung. Aufgrund ihrer guten Haftung und Elastizität können sie auf die Substrate einwirkende Kräfte, ausgelöst etwa durch Vibrationen oder Temperaturschwankungen, schonend dämpfen. Wenn solche Zusammensetzungen bei hoher Luftfeuchtigkeit und/oder erhöhter Temperatur eingesetzt werden, verläuft ihre Aushärtung aber oft unter störender, Haftung und Festigkeit beeinträchtigender Blasenbildung durch freigesetztes Kohlendioxid-Gas, das nicht schnell genug gelöst oder abgeleitet wird. Um die Blasenbildung zu vermindern, können den Zusammensetzungen chemisch blockierte Amine, sogenannte latente Härter, zugegeben werden, welche durch Hydrolyse Feuchtigkeit binden und dabei Aminogruppen freisetzen, welche ohne Kohlendioxid-Bildung mit den Isocyanatgruppen reagieren. Als latente Härter werden meist Verbindungen mit Aldimin-, Ketimin- oder Oxazolidin-Gruppen verwendet. Die bekannten latenten Härter bringen aber oft den Nachteil mit sich, vorzeitige Vernetzungsreaktionen der Isocyanatgruppen auszulösen und damit die Lagerstabilität der Zusammensetzung herabzusetzen und/oder deren Aushärtung so stark zu beschleunigen, dass sich eine zu kurze Offenzeit und damit ein zu kleines Verarbeitungsfenster ergibt. Zudem führen viele der bekannten latenten Härter bei der Aushärtung zu störenden Immissionen, verursacht durch leichtflüchtige, geruchsintensive Aldehyde oder Ketone, welche im latenten Härter als Blockierungsmittel dienen und durch Hydrolyse freigesetzt werden.

Aus WO 2004/013200 sind Polyurethan-Zusammensetzungen mit latenten Härtern bekannt, deren Blockierungsmittel geruchlos sind und in der ausgehärteten Zusammensetzung verbleiben. Diese Zusammensetzungen weisen aber den Nachteil auf, dass sie verstärkt zu Weichmachermigration neigen, was sich in Ausschwitzen (Bleeding), klebriger, leicht anschmutzender Oberfläche der Zusammensetzung, Verunreinigung oder Schädigung der Substrate oder in Problemen beim Überdecken, insbesondere Überstreichen, Überlackieren, Überbeschichten oder Überkleben, der Zusammensetzung zeigen kann. Besonders kritisch sind Anwendungen auf porösen Materialien wie Holz, Papier, Karton, Gips, Mörtel, Beton, Marmor oder anderen Natursteinen, indem in die Poren eindringende Weichmacher von aussen als Verfärbungen oder Flecken erkennbar sind. Besonders kritisch sind weiterhin Anwendungen auf Kunststoffen wie Polystyrol, Polycarbonat, Polyester oder PMMA, welche durch eindringende Weichmacher so geschädigt werden, dass darin bereits bei sehr geringer Belastung Spannungsrisse entstehen können. Besonders kritisch sind weiterhin Anwendungen, bei welchen die Zusammensetzung mit einer polymeren Deckschicht versehen wird, indem sie beispielsweise mit einem Farbanstrich, einem Lack, einer Beschichtung, einem Klebstoff oder Dichtstoff oder einer Schutzfolie bedeckt wird. Solche Deckschichten können durch Weichmachermigration erweichen oder aufquellen, klebrig, fleckig oder trüb werden oder sich von der Zusammensetzung ablösen.

Aus EP 0 947 529 sind einkomponentige Polyurethanmassen enthaltend ein Prepolymer, welches Isocyanat- und latente Amino-Gruppen aufweist, bekannt. Die latenten Aminogruppen basieren auf einem mit einem aromatischen Rest substituierten Benzaldehyd, insbesondere 3-Phenoxybenzaldehyd. Solche mit aromatischen Resten substituierte Benzaldehyde üben eine unerwünscht starke weichmachende Wirkung auf die ausgehärtete Masse aus und verringern deren Stabilität bei Belastung mit Feuchtigkeit, UV-Strahlung und Wärme empfindlich. Zudem sind diese Aldehyde nicht vollständig geruchlos, sondern weisen einen gut wahrnehmbaren, über lange Zeit anhaltenden Geruch auf.

### Darstellung der Erfindung

Aufgabe der vorliegenden Erfindung ist es daher, eine Zusammensetzung für die Verwendung als elastische(r) Klebstoff oder Dichtstoff oder Beschichtung für auf Weichmachermigration empfindliche Anwendungen zur Verfügung zu stellen, welche die Nachteile des Standes der Technik überwindet. Überraschenderweise wurde gefunden, dass die Verwendung einer Zusammensetzung wie in Anspruch 1 beschrieben diese Aufgabe löst. Die Zusammensetzung enthält mindestens ein Polyisocyanat und/oder mindestens ein Isocyanatgruppen-haltiges Polyurethanpolymer und mindestens einen latenten Härter mit speziellen Aldiminogruppen. Sie wird verwendet als elastische(r) Klebstoff, Dichtstoff oder Beschichtung für mindestens ein Substrat und/oder mindestens eine Deckschicht, welche empfindlich sind auf Weichmachermigration. Dabei entstehen überraschenderweise kaum durch Weichmachermigration aus der Zusammensetzung bedingte Schäden wie Ausschwitzen (Bleeding), Verfärbung, Fleckenbildung, Erweichung, Quellung oder Ablösung. Überraschenderweise ist der aus den Aldiminogruppen freigesetzte Aldehyd nicht nur unflüchtig und geruchsfrei, sondern auch besonders gut verträglich in der Polyurethanmatrix. Trotz des langkettigen Substituenten am Aryl-Rest ist seine Verträglichkeit in Polyurethanen ähnlich gut wie jene von aromatischen Aldehyden ohne langkettige Substituenten, welche aber einen deutlichen bis starken, langanhaltenden Geruch verursachen. Er migriert selber kaum und löst auch keine verstärkte Migration von Weichmachern aus. Somit können auf Weichmachermigration empfindliche Materialien ohne Einschränkungen als Substrat oder Deckschicht mit der Zusammensetzung verwendet werden. Die geringe Neigung zu Weichmachermigration ist überraschend. Latente Härter, deren Abspalter ein hohes Molekulargewicht aufweisen, sind naturgemäss besonders kritisch in Bezug auf Weichmachermigration nach der Aushärtung, da die eingesetzte Menge aufgrund des hohen Equivalentgewichts entsprechend hoch ist und somit eine hohe Menge an freigesetzem Aldehyd im ausgehärteten Material verbleibt. Zudem liesse der langkettige hydrophobe Substituent, insbesondere bei verzweigter Struktur, im hydrophilen, Wasserstoffbrücken aufweisenden Polymergerüst von Polyurethanen eine eher schlechte Verträglichkeit erwarten.

Die erfindungsgemässe Verwendung gewährleistet eine einfache Handhabung, indem die Zusammensetzung eine gute Lagerstabilität aufweist, über eine lange Offenzeit verfügt, ohne Blasenbildung aushärtet und keine störenden Immissionen verursacht. Dadurch bleibt sie lange nach ihrer Herstellung anwendbar, auch bei ungünstigen Lager- oder Transportbedingungen wie erhöhter oder wechselhafter Temperatur, gewährleistet auch unter klimatisch ungünstigen Anwendungsbedingungen, wie hoher Luftfeuchtigkeit und/oder Temperatur oder beim Einsatz von wasserhaltigen Beschleunigerkomponenten, ein genügend grosses Verarbeitungsfenster und eine störungsfreie Aushärtung und ist ohne Einschränkungen durch Immissionen auch in Innenräumen einsetzbar.

Ein weiterer Gegenstand der Erfindung ist ein aus der erfindungsgemässen Verwendung erhaltener Klebe- oder Abdichtungs- oder Beschichtungs-Verbund. Dieser ist geruchlos und sehr stabil gegenüber Feuchtigkeit, UV-Strahlung und Wärme und zeichnet sich insbesondere dadurch aus, dass darin überraschenderweise kaum durch Weichmachermigration ausgelöste Schäden auftreten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung einer Zusammensetzung umfassend
- mindestens ein Polyisocyanat und/oder mindestens ein Isocyanatgruppen-haltiges Polyurethanpolymer und
- mindestens einen latenten Härter mit Aldiminogruppe(n) der Formel (I), 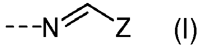
wobei Z für einen mit einer Alkyl- oder Alkoxy-Gruppe substituierten Aryl-Rest mit insgesamt 12 bis 26 C-Atomen steht,

als elastische(r) Klebstoff, Dichtstoff oder Beschichtung für mindestens ein Substrat und/oder mindestens eine Deckschicht, welche empfindlich sind auf Weichmachermigration, dadurch gekennzeichnet, dass das Substrat ein poröses Material oder ein Spannungsriss-bildender Kunststoff ist.

Eine gestrichelte Linie in den Formeln stellt jeweils die Bindung zwischen einem Substituenten und dem zugehörigen Molekülrest dar.

Als "sekundäres C-Atom" wird ein C-Atom bezeichnet, welches an zwei Wasserstoff-Atome gebunden ist.

Als "tertiäres C-Atom" wird ein C-Atom bezeichnet, welches nur an ein Wasserstoff-Atom gebunden ist.

Als "quartäres C-Atom" wird ein C-Atom bezeichnet, welches an kein Wasserstoff-Atom gebunden ist.

Als "aromatisches Isocyanat" wird ein Isocyanat bezeichnet, dessen Isocyanatgruppen direkt an ein aromatisches C-Atom gebunden sind. Dementsprechend werden solche Isocyanatgruppen als "aromatische Isocyanatgruppen" bezeichnet.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird üblicherweise mittels Gelpermeationschromatographie (GPC) gegen Polystyrol als Standard bestimmt.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Mit "Poly" beginnende Substanznamen wie Polyamin, Polyol oder Polyisocyanat bezeichnen Substanzen, die formal zwei oder mehr der in ihrem Namen vorkommenden funktionellen Gruppen pro Molekül enthalten.

Als "primäres Polyamin" wird eine Verbindung mit mindestens zwei primären Aminogruppen bezeichnet.

Mit dem Begriff "Viskosität" wird die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet. "Empfindlich auf Weichmachermigration" bedeutet für ein Material, dass es durch Kontakt mit Weichmacher in seinen optischen und/oder mechanischen Eigenschaften in einem relevanten Ausmass verändert bzw. geschädigt werden kann.

Als "Weichmacher" werden flüssige oder gelöste Substanzen bezeichnet, welche im ausgehärteten Polymer nicht chemisch eingebunden sind und typischerweise eine weichmachende Wirkung auf das Polymer ausüben.

Ein Substrat, welches empfindlich ist auf Weichmachermigration, ist ein poröses Material oder ein Spannungsriss-bildender Kunststoff.

Das poröse Material ist dabei insbesondere ausgewählt aus der Gruppe bestehend aus Holz, Papier, Karton, Gips, Mörtel, Faserzement, Beton und Naturstein. Geeignete Natursteine sind insbesondere Marmor, Granit, Gneis, Kalkstein oder Sandstein, insbesondere Marmor. Marmor ist ein besonders feinporiges Material und somit besonders empfindlich auf Weichmachermigration.

Ein poröses Material ist insofern empfindlich auf Weichmachermigration, als migrationsfähige Substanzen aus der ausgehärteten Zusammensetzung in die

Poren des Materials migrieren können und dadurch in der Nähe der ausgehärteten Zusammensetzung Flecken bzw. Verschmutzungen entstehen.

Der Spannungsriss-bildende Kunststoff ist dabei insbesondere ausgewählt aus der Gruppe bestehend aus Polystyrol, Polycarbonat, Polyester und PMMA (Polymethylmethacrylat).

Ein Spannungsriss-bildender Kunststoff ist insofern empfindlich auf Weichmachermigration, als migrationsfähige Substanzen aus der ausgehärteten Zusammensetzung in den Kunststoff migrieren und diesen so schädigen können, dass im Kunststoff schon bei kleinen Belastungen im Bereich der ausgehärteten Zusammensetzung Spannungsrisse entstehen, während der restliche, nicht mit der Zusammensetzung in Kontakt stehende Bereich des Kunststoffs keine Spannungsrisse bildet. Dieses Phänomen wird auch als Environmental Stress Cracking (ESC) bezeichnet und tritt hauptsächlich bei amorphen Polymeren auf.

Eine Deckschicht, welche empfindlich ist auf Weichmachermigration, besteht insbesondere aus einem polymeren Material oder härtet dazu aus.

Eine solche Deckschicht ist insofern empfindlich auf Weichmachermigration, als migrationsfähige Substanzen aus der damit in Kontakt stehenden ausgehärteten Zusammensetzung in die Deckschicht migrieren können und dabei deren Aushärtung stören und/oder diese so schädigen können, dass ihre Funktion und/oder ihr optisches Erscheinungsbild gestört ist. Beobachtet werden insbesondere Erweichung, Quellung, Klebrigkeit, Fleckenbildung oder Trübung der Deckschicht, Ausschwitzen (Bleeding) oder Haftprobleme bzw. Ablösen der Deckschicht.

Als Deckschicht bevorzugt ist eine Abdichtungsschicht oder eine Klebeschicht oder eine Beschichtung oder eine Schutzfolie.

Die Abdichtungsschicht oder Klebeschicht stellt insbesondere einen Dichtstoff oder Klebstoff auf Basis von Polyurethan, silanmodifiziertem Polymer oder Silikon dar.

Die Beschichtung stellt insbesondere einen Lack, einen Farbanstrich oder eine Beschichtung aus Polyurethan, Polyepoxid oder Polyacrylat dar.

Die Schutzfolie stellt insbesondere eine Schutzfolie aus Kunststoff dar.

Es ist möglich, dass die Deckschicht aus dem gleichen Material wie die Zusammensetzung besteht. Besonders kritisch in Bezug auf Weichmachermigration ist aber der Fall, bei welchem sich die Zusammensetzung und die Deckschicht in ihrer Rezeptur voneinander unterscheiden, beispielsweise in Bezug auf ihren Weichmachergehalt. Bevorzugt unterscheiden sich die Zusammensetzung und die Deckschicht in Bezug auf ihre Rezeptur voneinander.

Die Zusammensetzung umfasst mindestens einen latenten Härter mit Aldiminogruppe(n) der Formel (I).

Z steht bevorzugt für einen Rest der Formel (II), 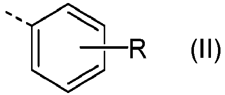 wobei R für einen linearen oder verzweigten Alkyl- oder Alkoxy-Rest mit 6 bis 20, bevorzugt 8 bis 16, C-Atomen steht.

Die Aldiminogruppe der Formel (I) steht somit bevorzugt für

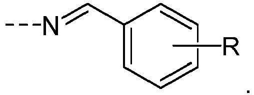

R steht bevorzugt für einen linearen oder verzweigten Alkyl-Rest mit 10 bis 14 C-Atomen oder für einen linearen oder verzweigten Alkoxy-Rest mit 8 bis 12 C-Atomen.

R steht insbesondere für einen linearen oder verzweigten Alkyl-Rest mit 10 bis 14 C-Atomen. Ein solcher latenter Härter ist besonders reaktiv.

R steht besonders bevorzugt für einen verzweigten Alkyl-Rest. Ein solcher latenter Härter ist bei Raumtemperatur typischerweise flüssig und vergleichsweise niedrigviskos, was für seine Handhabung sehr vorteilhaft ist.

R steht ganz besonders bevorzugt für einen verzweigten Alkyl-Rest mit 10 bis 14 C-Atomen. Ein solcher latenter Härter ist besonders reaktiv, bei Raumtemperatur meist flüssig und vergleichsweise niedrigviskos.

Bevorzugt steht R in meta- oder para-Stellung, insbesondere in para-Stellung. Solche latenten Härter sind besonders gut zugänglich.

Ganz besonders bevorzugt steht R für einen Rest der Formel 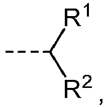 wobei R¹ und R² jeweils für einen Alkyl-Rest stehen und zusammen 9 bis 13 C-Atome aufweisen. Bevorzugt sind die Reste R¹ und R² jeweils linear.

Am meisten bevorzugt steht Z somit für einen Rest der Formel (IIa), 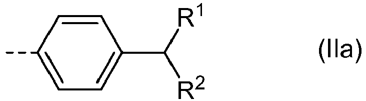 wobei R¹ und R² die genannten Bedeutungen aufweisen.

Die Aldiminogruppe der Formel (I) steht somit am meisten bevorzugt für

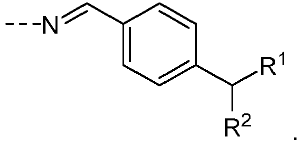

Solche latenten Härter sind besonders gut zugänglich, besonders geruchsarm und bei Raumtemperatur typischerweise flüssig.

Der latente Härter mit Aldiminogruppe(n) der Formel (I) ist bevorzugt ein Polyaldimin der Formel (III), 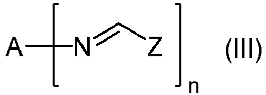 wobei
n für 2 oder 3 steht,
A für einen n-wertigen, gegebenenfalls Ether-Sauerstoff aufweisenden Kohlenwasserstoff-Rest mit einem Molekulargewicht im Bereich von 28 bis 6'000 g/mol steht, und
Z die bereits genannten Bedeutungen aufweist.

Ein Polyaldimin der Formel (III) ist bei Raumtemperatur typischerweise flüssig und zusammen mit Polyisocyanaten lagerstabil.

Bevorzugt steht n für 2.

Bevorzugt steht A für einen n-wertigen aliphatischen, cycloaliphatischen oder arylaliphatischen, gegebenenfalls Ether-Sauerstoff aufweisendenen Kohlenwasserstoff-Rest mit einem Molekulargewicht im Bereich von 28 bis 6'000 g/mol. Die Verwendung solcher auf aliphatischen Aminen basierenden Zusammensetzungen sind toxikologisch besonders vorteilhaft.

Besonders bevorzugt steht A für einen zweiwertigen aliphatischen, cycloaliphatischen oder arylaliphatischen Kohlenwasserstoff-Rest mit einem Molekulargewicht im Bereich von 28 bis 300 g/mol, welcher über ein sekundäres C-Atom gebunden und spiegelsymmetrisch ist. Solche latente Härter ermöglichen eine besonders rasche Aushärtung und ermöglichen ein besonders hohes Elastizitätsmodul.

Dabei ist A insbesondere ausgewählt aus der Gruppe bestehend aus 1,2-Ethylen, 1,3-Propylen, 1,4-Butylen, 1,5-Pentylen, 1,6-Hexylen, 1,8-Octylen, 1,10-Decylen, 1,12-Dodecylen, 1,3-Cyclohexylen-bis(methylen), 1,4-Cyclohexylen-bis(methylen), 1,3-Phenylen-bis(methylen) und 1,4-Phenylen-bis(methylen).

Davon bevorzugt ist 1,6-Hexylen, 1,12-Dodecylen, 1,3-Cyclohexylen-bis(methylen), 1,4-Cyclohexylen-bis(methylen), 1,3-Phenylen-bis(methylen) oder 1,4-Phenylen-bis(methylen).

Solche latenten Härter sind besonders gut zugänglich.

Weiterhin besonders bevorzugt steht A entweder für einen zweiwertigen aliphatischen oder cycloaliphatischen Kohlenwasserstoff-Rest mit einem Molekulargewicht im Bereich von 42 bis 500 g/mol, welcher über mindestens ein tertiäres oder quartäres C-Atom gebunden ist und/oder ein bi- oder tricyclisches Ringsystem enthält, oder für einen n-wertigen Polyoxyalkylen-Rest mit einem Molekulargewicht im Bereich von 170 bis 6'000 g/mol, welcher terminal über mindestens ein tertiäres oder quartäres C-Atom gebunden ist. Solche latenten Härter sind besonders lagerstabil, insbesondere mit aromatischen Isocyanatgruppen, und ergeben besonders gute mechanische Eigenschaften. Dabei ist A insbesondere ausgewählt aus der Gruppe bestehend aus 1,2-Propylen, 1,3-Pentylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, Methylendicyclohexan-4-yl, Methylenbis(2-methylcyclohexan-4-yl), (Bicyclo-[2.2.1]heptan-2,5(2,6)-diyl)dimethylen, (Tricyclo[5.2.1.0^{2,6}]decan-3(4),8(9)-diyl)dimethylen, α,ω-Polyoxypropylen mit einem mittleren Molekulargewicht im Bereich von 170 bis 4'000 g/mol und Trimethylolpropan- oder Glycerin-gestartetes Tris(ω-polyoxypropylen) mit einem mittleren Molekulargewicht im Bereich von 330 bis 6'000 g/mol.

Davon bevorzugt ist (1,5,5-Trimethylcyclohexan-1-yl)methan-1,3, 4(2)-Methyl-1,3-cyclohexylen, 1,2-Cyclohexylen, Methylendicyclohexan-4-yl, (Bicyclo-[2.2.1]heptan-2,5(2,6)-diyl)dimethylen, (Tricyclo[5.2.1.0^{2,6}]decan-3(4),8(9)-diyl)-dimethylen, α,ω-Polyoxypropylen mit einem mittleren Molekulargewicht im Bereich von 170 bis 2'000 g/mol, insbesondere 170 bis 470 g/mol, oder Trimethylolpropan- oder Glycerin-gestartetes Tris(ω-polyoxypropylen) mit einem mittleren Molekulargewicht im Bereich von 330 bis 450 g/mol.

Solche latenten Härter sind besonders gut zugänglich.

Der latente Härter mit Aldiminogruppe(n) der Formel (I) ist weiterhin bevorzugt ein Aldimin der Formel (IV), 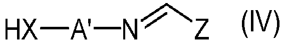 wobei
A' für einen zweiwertigen aliphatischen oder cycloaliphatischen oder arylaliphatischen, gegebenenfalls Ether-Sauerstoff oder Amin-Stickstoff aufweisenden Kohlenwasserstoff-Rest mit einem Molekulargewicht im Bereich von 28 bis 500 g/mol steht,
X für O oder S oder NR⁰ steht, wobei R⁰ für einen Wasserstoff-Rest oder für einen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder Aldiminogruppe der Formel (I) aufweist, und
Z die bereits genannten Bedeutungen aufweist.

Ein Aldimin der Formel (IV) steht gegebenenfalls im Gleichgewicht mit einer cyclischen Verbindung der Formel (IV'), 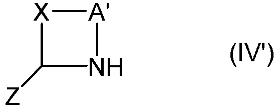 wobei X, A' und Z die bereits genannten Bedeutungen aufweisen. Verbindungen der Formel (IV') werden insbesondere für den Fall beobachtet, dass die Aldiminogruppe und die HX-Gruppe im Aldimin der Formel (IV) durch zwei oder drei Kohlenstoffatome getrennt sind; sie stellen dabei 2-substituierte 1,3-Oxazolidine (5-Ring) oder Tetrahydro-1,3-oxazine (6-Ring) dar.

A' ist bevorzugt ausgewählt aus der Gruppe bestehend aus 1,2-Ethylen, 1,2-Propylen, 1,3-Propylen, 1,5-Pentylen, 1,6-Hexylen, (1,5,5-Trimethylcyclohexan-1-yl)methan-1,3 und 3-Oxa-1,5-pentylen.

Davon bevorzugt ist 1,2-Ethylen, 1,3-Propylen, 1,6-Hexylen, (1,5,5-Trimethylcyclohexan-1-yl)methan-1,3 oder 3-Oxa-1,5-pentylen.

### Bevorzugt steht X für O oder für NR⁰.

Bevorzugt steht R⁰ für einen Wasserstoff-Rest oder einen einwertigen Kohlenwasserstoff-Rest mit 1 bis 18, insbesondere 1 bis 12, C-Atomen, oder für 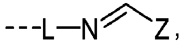 wobei L für einen Alkylen-Rest mit 1 bis 6 C-Atomen, insbesondere Ethylen, 1,3-Propylen oder 1,6-Hexylen, steht. Besonders bevorzugt steht R⁰ für einen einwertigen Kohlenwasserstoff-Rest mit 1 bis 12 C-Atomen oder für 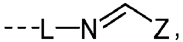 insbesondere für Methyl, Ethyl, Cyclohexyl, Benzyl oder

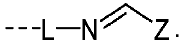

Für den Fall, dass X für O steht, steht A insbesondere für (1,5,5-Trimethylcyclohexan-1-yl)methan-1,3 oder 3-Oxa-1,5-pentylen.

Für den Fall, dass X für NR⁰ steht, stehen insbesondere A für Ethylen und R⁰ für 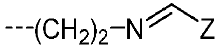 oder 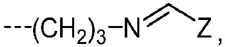 oder A für 1,3-Propylen und R⁰ für 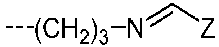 oder Methyl, Ethyl oder Cyclohexyl, oder A für 1,6-Hexylen und R⁰ für

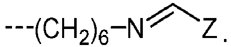

Der latente Härter mit Aldiminogruppe(n) der Formel (I) ist weiterhin bevorzugt ein Umsetzungsprodukt mit Aldiminogruppe(n) der Formel (V), 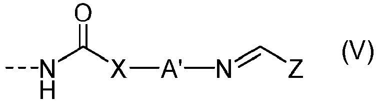 wobei X, A' und Z die bereits genannten Bedeutungen aufweisen.

Das Umsetzungsprodukt mit Aldiminogruppe(n) der Formel (V) wird insbesondere erhalten aus der Umsetzung von mindestens einem Aldimin der Formel (IV) mit mindestens einem Polyisocyanat.

Für die Umsetzung wird mindestens ein Aldimin der Formel (IV) unter Ausschluss von Feuchtigkeit mit mindestens einem Polyisocyanat vermischt, wobei die HX-Gruppen mit vorhandenen Isocyanatgruppen reagieren. Die Umsetzung kann bei Umgebungstemperatur oder bei einer erhöhten Temperatur erfolgen.

Bevorzugt ist eine Temperatur im Bereich von 0 bis 180°C, bevorzugt 10 bis 180°C, insbesondere 20 bis 180°C. Dabei kann ein Katalysator vorhanden sein, insbesondere eine Bismut(III)-, Zink(II)-, Zirkonium(IV)- oder Zinn(II)-Verbindung oder eine Organozinn(IV)-Verbindung. Bei der Umsetzung können weitere Bestandteile von üblicherweise in Polyurethanzusammensetzungen verwendeten Substanzen vorhanden sein, zum Beispiel Katalysatoren, Füllstoffe, Weichmacher oder Lösemittel.

Die Umsetzung kann unterstöchiometrisch, d.h. bei einem OH/NCO-Verhältnis von unter 1, durchgeführt werden. Dabei wird ein Umsetzungsprodukt erhalten, welches neben Aldiminogruppen zusätzlich auch Isocyanatgruppen aufweist. Die Umsetzung kann weiterhin stöchiometrisch oder in überstöchiometisch, d.h. bei einem OH/NCO-Verhältnis von 1 oder darüber, durchgeführt werden. Dabei wird ein Umsetzungsprodukt erhalten, welches frei ist von Isocyanatgruppen.

Für die Herstellung eines Umsetzungsprodukts mit Aldiminogruppe(n) der Formel (V) sind diejenigen Polyisocyanate geeignet, die im Folgenden als Bestandteil der Zusammensetzung genannt werden.

Das Umsetzungsprodukt mit Aldiminogruppe(n) der Formel (V) kann getrennt von der beschriebenen Zusammensetzung hergestellt werden, oder es kann in situ in der beschriebenen Zusammensetzung entstehen.

Am meisten bevorzugt als latenter Härter mit Aldiminogruppe(n) der Formel (I) ist ein Polyaldimin der Formel (III).

Die bevorzugten latenten Härter mit Aldiminogruppe(n) der Formel (I) ergeben besonders gute Eigenschaften für die erfindungsgemässe Verwendung und sind besonders gut zugänglich und/oder besonders niedrigviskos und/oder ermöglichen Zusammensetzungen mit besonders guter Lagerstabilität und/oder besonders guten mechanischen Eigenschaften oder Beständigkeiten.

Besonders bevorzugt ist der latente Härter mit Aldiminogruppe(n) der Formel (I) ausgewählt aus der Gruppe bestehend aus N,N'-Bis(4-alkylbenzyliden)-1,6-hexandiamin, N,N'-Bis(4-alkylbenzyliden)-1,12-dodecandiamin, N,N'-Bis(4-al-kylbenzyliden)-1,3-bis(aminomethyl)cyclohexan, N,N'-Bis(4-alkylbenzyliden)-1,4-bis(aminomethyl)cyclohexan, N,N'-Bis(4-alkylbenzyliden)-1,3-bis(aminomethyl)benzol, N,N'-Bis(4-alkylbenzyliden)-1,4-bis(aminomethyl)benzol, N,N'-Bis-(4-alkylbenzyliden)-3-aminomethyl-3,5,5-trimethylcyclohexylamin, N,N'-Bis(4-alkylbenzyliden)-4(2)-methyl-1,3-cyclohexandiamin, N,N'-Bis(4-alkylbenzyliden)-1,2-cyclohexandiamin, N,N'-Bis(4-alkylbenzyliden)-bis(4-aminocyclohexyl)methan, N,N'-Bis(4-alkylbenzyliden)-2,5(2,6)-bis(aminomethyl)bicyclo-[2.2.1]heptan, N,N'-Bis(4-alkylbenzyliden)-3(4),8(9)-bis(aminomethyl)tricyclo-[5.2.1.0^{2,6}]decan, N,N'-Bis(4-alkylbenzyliden)polyoxypropylendiamin mit einem mittleren Molekulargewicht im Bereich von 650 bis 1050 g/mol, N,N',N"-Tris(4-alkylbenzyliden)polyoxypropylentriamin mit einem mittleren Molekulargewicht im Bereich von 1050 bis 1350 g/mol und Umsetzungsprodukten von N-(4-Alkylbenzyliden)-3-aminomethyl-3,5,5-trimethylcyclohexanol oder N-(4-Alkylbenzyliden)-2-(2-aminoethoxy)ethanol oder N-(4-Alkylbenzyliden)-N'-methyl-1,3-propandiamin oder N-(4-Alkylbenzyliden)-N'-ethyl-1,3-propandiamin oder N-(4-Alkylbenzyliden)-N'-cyclohexyl-1,3-propandiamin oder N,N"-Bis(4-alkylbenzyliden)-N'-(2-aminoethyl)ethan-1,2-diamin oder N,N"-Bis(4-alkylbenzyliden)-N'-(3-aminopropyl)propan-1,3-diamin oder N,N"-Bis(4-alkylbenzyliden)-N'-(2-aminoethyl)propan-1,3-diamin oder N,N"-Bis(4-alkylbenzyliden)-N'-(6-aminohexyl)hexan-1,6-diamin mit Polyisocyanaten, wobei Alkyl jeweils für einen linearen oder insbesondere verzweigten Decyl-, Undecyl-, Dodecyl-, Tridecyl- oder Tetradecyl-Rest steht.

Der latente Härter mit Aldiminogruppe(n) der Formel (I) wird bevorzugt erhalten aus der Umsetzung von mindestens einer Verbindung mit primären Amino-gruppen mit mindestens einem Aldehyd der Formel (VI) in einer Kondensationsreaktion unter Freisetzung von Wasser, gegebenenfalls gefolgt von der Umsetzung mit mindestens einem Polyisocyanat zu einem Umsetzungsprodukt mit Aldiminogruppe(n) der Formel (V).

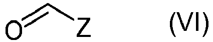

In der Formel (VI) weist Z die bereits genannten Bedeutungen auf.

Der Aldehyd der Formel (IV) wird dabei bevorzugt stöchiometrisch oder im stöchiometrischen Überschuss in Bezug auf die primären Aminogruppen eingesetzt. Auf diese Weise ist das Reaktionsprodukt weitgehend oder ganz frei von primären Aminogruppen.

Der latente Härter mit Aldiminogruppe(n) der Formel (I) wird bevorzugt in Form eines Reaktionsprodukts aus dieser Umsetzung eingesetzt, wobei der Aldehyd stöchiometrisch oder im stöchiometrischen Überschuss in Bezug auf die primären Aminogruppen vorhanden war.

Die Umsetzung wird vorteilhaft bei einer Temperatur im Bereich von 15 bis 120°C, bevorzugt bei 20 bis 100°C, durchgeführt, gegebenenfalls in Anwesenheit eines Lösemittels. Das Kondensationswasser wird bevorzugt aus der Reaktionsmischung entfernt, entweder als Azeotrop mit einem geeigneten Lösemittel oder bevorzugt direkt durch Destillation, gegebenenfalls unter Vakuum.

Gegebenenfalls wird bei der Umsetzung ein Katalysator eingesetzt, insbesondere ein Säure-Katalysator.

Besonders bevorzugt wird ohne Lösemittel gearbeitet und das Kondensationswasser mittels Anlegen von Vakuum aus der erwärmten Reaktionsmischung entfernt.

Ein solches Reaktionsprodukt kann ohne weitere Aufarbeitung als latenter Härter in der Zusammensetzung verwendet werden.

Bevorzugt wird die Verbindung mit primären Aminogruppen und der Aldehyd der Formel (VI) zu einer Reaktionsmischung vereint, wobei der Aldehyd in Bezug auf die primären Aminogruppen stöchiometrisch oder im stöchiometrischen Überschuss vorhanden ist, und das Kondensationswasser mit einer geeigneten Methode aus der Reaktionsmischung entfernt wird, gegebenenfalls unter Erwärmen der Reaktionsmischung.

Als Verbindung mit primären Aminogruppen bevorzugt ist ein primäres Polyamin der Formel A⁅NH₂]ₙ, wobei A und n die bereits genannten Bedeutungen aufweisen.

Geeignet sind insbesondere 1,2-Ethandiamin, 1,2-Propandiamin, 1,3-Propandiamin, 1,4-Butandiamin, 1,3-Butandiamin, 2-Methyl-1,2-propandiamin, 1,3-Pentandiamin, 1,5-Pentandiamin, 2,2-Dimethyl-1,3-propandiamin, 1,6-Hexandiamin, 1,5-Diamino-2-methylpentan, 1,3,6-Triaminohexan, 1,7-Heptandiamin, 1,8-Octandiamin, 1,4,8-Triaminooctan, 2,5-Dimethyl-1,6-hexandiamin, 1,9-Nonandiamin, 2,2(4),4-Trimethyl-1,6-hexandiamin, 4-Aminomethyl-1,8-octandiamin, 5-Aminomethyl-1,8-octandiamin, 1,10-Decandiamin, 1,11-Undecandiamin, 1,6,11-Triaminoundecan, 2-Butyl-2-ethyl-1,5-pentandiamin, 1,12-Dodecandiamin, 1,2-Cyclohexandiamin, 1,3-Cyclohexandiamin, 1,4-Cyclohexandiamin, 1,3,5-Triaminocyclohexan, 1-Amino-3-aminomethyl-3,5,5-trimethylcyclohexan, 4(2)-Methyl-1,3-cyclohexandiamin, 1,3-Bis(aminomethyl)cyclohexan, 1,4-Bis(aminomethyl)cyclohexan, 1,3,5-Tris-(aminomethyl)cyclohexan, Bis(4-aminocyclohexyl)methan, Bis(4-amino-3-methylcyclohexyl)methan, Bis(4-amino-3-ethylcyclohexyl)methan, Bis-(4-amino-3,5-dimethylcyclohexyl)methan, Bis(4-amino-3-ethyl-5-methylcyclohexyl)methan, 2,5(2,6)-Bis(aminomethyl)bicyclo[2.2.1]heptan, 3(4),8(9)-Bis(aminomethyl)tricyclo[5.2.1.0^{2,6}]decan, 1,3-Bis-(aminomethyl)benzol, 1,4-Bis(aminomethyl)benzol, 1,3,5-Tris(aminomethyl)-benzol, 3-Oxa-1,5-pentandiamin, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin, α,ω-Polyoxypropylendiamin mit einem mittleren Molekulargewicht im Bereich von 200 bis 4'000 g/mol, insbesondere die Jeffamine^{®}-Typen D-230, D-400, XTJ-582, D-2000, XTJ-578, D-4000 (alle von Huntsman), α,ω-Polyoxypropylenpolyoxy-ethylendiamin, insbesondere die Jeffamine^{®}-Typen ED-600, ED-900, ED-2003, HK-511 (alle von Huntsman), α,ω-Polyoxypropylenpolyoxy-1,4-butylendiamin, insbesondere die Jeffamine^{®}-Typen THF-100, THF-140, THF-230, XTJ-533 oder XTJ-536 (alle von Huntsman), α,ω-Polyoxypropylenpolyoxy-1,2-butylendiamin, insbesondere die Jeffamine^{®}-Typen XTJ-568 oder XTJ-569 (beide von Huntsman), α,ω-Polyoxy-1,2-butylendiamin, insbesondere Jeffamine^{®} XTJ-523 (von Huntsman), Trimethylolpropan- oder Glycerin-gestartetes Tris(ω-polyoxy-propylenamin) mit einem mittleren Molekulargewicht im Bereich von 380 bis 6'000 g/mol, insbesondere die Jeffamine^{®}-Typen T-403, T-3000 oder T-5000 (alle von Huntsman), Trimethylolpropan-gestartetes Tris(ω-polyoxypropylen-polyoxy-1,2-butylenamin), insbesondere Jeffamine^{®} XTJ-566 (von Huntsman), 1,3-Phenylendiamin, 1,4-Phenylendiamin, 4(2)-Methyl-1,3-phenylendiamin (TDA), 3,5-Diethyl-2,4(6)-toluylendiamin (DETDA) oder 4,4'-Diaminodiphenylmethan (MDA).

Davon bevorzugt ist 1,2-Ethandiamin, 1,2-Propandiamin, 1,3-Propandiamin, 1,4-Butandiamin, 1,3-Pentandiamin, 1,5-Pentandiamin, 1,6-Hexandiamin, 1,8-Octandiamin, 1,10-Decandiamin, 1,12-Dodecandiamin, 1,2-Cyclohexandiamin, 1,3-Cyclohexandiamin, 1,4-Cyclohexandiamin, 1-Amino-3-aminomethyl-3,5,5-trimethylcyclohexan, 4(2)-Methyl-1,3-cyclohexandiamin, 1,3-Bis(aminomethyl)-cyclohexan, 1,4-Bis(aminomethyl)cyclohexan, Bis(4-aminocyclohexyl)methan, Bis(4-amino-3-methylcyclohexyl)methan, 2,5(2,6)-Bis(aminomethyl)bicyclo-[2.2.1]heptan, 3(4),8(9)-Bis(aminomethyl)tricyclo[5.2.1.0^{2,6}]decan, 1,3-Bis(aminomethyl)benzol, 1,4-Bis(aminomethyl)benzol, Polyoxypropylendiamin mit einem mittleren Molekulargewicht im Bereich von 200 bis 4'000 g/mol, oder Trimethylolpropan- oder Glycerin-gestartetes Polyoxypropylentriamin mit einem mittleren Molekulargewicht im Bereich von 380 bis 6'000 g/mol.

Bevorzugte Polyoxypropylendi- oder -triamine sind die kommerziellen Typen Jeffamine^{®} D-230, Jeffamine^{®} D-400, Jeffamine^{®} D-2000, Jeffamine^{®} D-4000, Jeffamine^{®} T-403, Jeffamine^{®} T-3000, Jeffamine^{®} T-5000 (von Huntsman) oder äquivalente Typen anderer Hersteller, insbesondere Jeffamine^{®} D-230, Jeffamine^{®} D-400 oder Jeffamine^{®} T-403 oder äquivalente Typen anderer Hersteller.

Besonders bevorzugt ist 1,6-Hexandiamin, 1,12-Dodecandiamin, 1,3-Bis(aminomethyl)cyclohexan, 1,4-Bis(aminomethyl)cyclohexan, 1,3-Bis(aminomethyl)-benzol oder 1,4-Bis(aminomethyl)benzol.

Weiterhin besonders bevorzugt ist 1-Amino-3-aminomethyl-3,5,5-trimethylcyclohexan, 4(2)-Methyl-1,3-cyclohexandiamin, 1,2-Cyclohexandiamin, Bis(4-aminocyclohexyl)methan, 2,5(2,6)-Bis(aminomethyl)bicyclo[2.2.1]heptan, 3(4),8(9)-Bis(aminomethyl)tricyclo[5.2.1.0^{2,6}]decan, Polyoxypropylendiamin mit einem mittleren Molekulargewicht im Bereich von 200 bis 2'000 g/mol, insbesondere 200 bis 500 g/mol, oder Trimethylolpropan- oder Glycerin-gestartetes Polyoxypropylentriamin mit einem mittleren Molekulargewicht im Bereich von 380 bis 500 g/mol.

Als Verbindung mit primären Aminogruppen bevorzugt ist weiterhin ein primäres Amin der Formel HX-A'-NH₂, wobei X und A' die bereits genannten Bedeutungen aufweisen.

Geeignet sind insbesondere 2-Aminoethanol, 2-Amino-1-propanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol oder höhere Homologe davon, 4-(2-Aminoethyl)-2-hydroxyethylbenzol, 3-Aminomethyl-3,5,5-trimethylcyclohexanol, eine primäre Aminogruppe tragende Derivate von Glykolen wie Diethylenglykol, Dipropylenglykol, Dibutylenglykol oder höhere Oligomere oder Polymere dieser Glykole, insbesondere 2-(2-Aminoethoxy)-ethanol, 2-(2-(2-Aminoethoxy)ethoxy)ethanol oder α-(2-Hydroxymethylethyl)-ω-(2-aminomethylethoxy)-poly(oxy(methyl-1,2-ethandiyl), Produkte aus der einfachen Cyanoethylierung und anschliessender Hydrierung von Glykolen, insbesondere 3-(2-Hydroxyethoxy)propylamin, 3-(2-(2-Hydroxyethoxy)ethoxy)propylamin, 3-(6-Hydroxyhexyloxy)propylamin, Mercaptoamine wie insbesondere 2-Aminoethanthiol, 3-Aminopropanthiol, 4-Amino-1-butanthiol, 6-Amino-1-hexanthiol, 8-Amino-1-octanthiol, 10-Amino-1-decanthiol oder 12-Amino-1-dodecanthiol, weiterhin N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethylpiperidin, 3-(4-Aminobutyl)piperidin, N-(2-Aminoethyl)piperazin, N-(2-Aminopropyl)piperazin, Diamine aus der Cyanoethylierung oder Cyanobutylierung und anschliessender Hydrierung von primären Monoaminen wie insbesondere N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentyl-amin, 3-Hexylamino-1-pentylamin, 3-(2-Ethylhexyl)amino-1-pentylamin, 3-Dodecylamino-1-pentylamin oder 3-Cyclohexylamino-1-pentylamin, oder Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind, die Produkte aus der Michael-artigen Addition von aliphatischen primären Diaminen mit Acrylnitril, Malein- oder Fumarsäurediestern, Citraconsäurediestern, (Meth)acrylsäureestern, (Meth)acrylsäureamiden oder Itaconsäurediestern, umgesetzt im Molverhältnis 1:1, weiterhin Bis(hexamethylen)triamin (BHMT), Diethylentriamin (DETA), Dipropylentriamin (DPTA), N-(2-Aminoethyl)-1,3-propandiamin (N3-Amin), N3-(3-Aminopentyl)-1,3-pentandiamin oder N5-(3-Amino-1-ethylpropyl)-2-methyl-1,5-pentandiamin.

Davon bevorzugt ist 2-Aminoethanol, 2-Amino-1-propanol, 1-Amino-2-propanol, 3-Amino-1-propanol, 5-Amino-1-pentanol, 6-Amino-1-hexanol, 3-Aminomethyl-3,5,5-trimethylcyclohexanol, 2-(2-Aminoethoxy)ethanol, N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, Bis(hexamethylen)triamin, Diethylentriamin, Dipropylentriamin oder N-(2-Aminoethyl)-1,3-propandiamin.

Besonders bevorzugt ist 3-Aminomethyl-3,5,5-trimethylcyclohexanol, 2-(2-Aminoethoxy)ethanol, N-Methyl-1,3-propandiamin, N-Ethyl-1,3-propandiamin, N-Cyclohexyl-1,3-propandiamin, Bis(hexamethylen)triamin, Diethylentriamin, Dipropylentriamin oder N-(2-Aminoethyl)-1,3-propandiamin.

Ein bevorzugter Aldehyd der Formel (VI) ist ein Aldehyd der Formel (VIa), wobei R die bereits beschriebenen Bedeutungen aufweist.

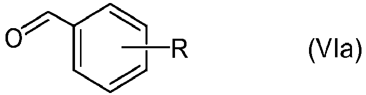

Ein besonders bevorzugter Aldehyd der Formel (VI) ist ein Aldehyd der Formel (VIb), wobei R¹ und R² die bereits beschriebenen Bedeutungen aufweisen.

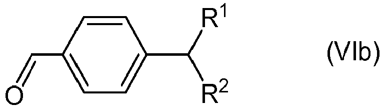

Als Aldehyd der Formel (VI) insbesondere bevorzugt sind 4-Decylbenzaldehyde, 4-Undecylbenzaldehyde, 4-Dodecylbenzaldehyde, 4-Tridecylbenzaldehyde oder 4-Tetradecylbenzaldehyde, bei welchen die Alkyl-Reste linear oder verzweigt, insbesondere verzweigt, sind.

Als Aldehyd der Formel (VI) am meisten bevorzugt ist ein Gemisch enthaltend 4-Decylbenzaldehyde, 4-Undecylbenzaldehyde, 4-Dodecylbenzaldehyde, 4-Tridecylbenzaldehyde und 4-Tetradecylbenzaldehyde, deren Alkyl-Reste mehrheitlich verzeigt sind.

Bevorzugt enthält die Zusammensetzung ein Gemisch aus latenten Härtern mit Aldiminogruppe(n) der Formel (I), bei welchen Z jeweils für einen Rest der Formel (II) steht und R dabei ausgewählt ist aus Alkyl-Resten mit 6 bis 20 C-Atomen.

Besonders bevorzugt enthält die Zusammensetzung ein Gemisch aus latenten Härtern mit Aldiminogruppe(n) der Formel (I), bei welchen Z jeweils für einen Rest der Formel (II) steht und R dabei ausgewählt ist aus linearen oder insbesondere verzweigten Decyl-, Undecyl-, Dodecyl-, Tridecyl- und Tetradecyl-Resten.

Ein solches Gemisch ist technisch besonders einfach zugänglich.

Die Zusammensetzung umfasst weiterhin mindestens ein Polyisocyanat und/oder mindestens ein Isocyanatgruppen-haltiges Polyurethanpolymer.

Als Polyisocyanat geeignet ist insbesondere ein im Handel erhältliches Polyisocyanat, insbesondere
- aromatische Di- oder Triisocyanate, bevorzugt 4,4'- oder 2,4'- oder 2,2'-Diphenylmethandiisocyanat oder beliebigen Gemischen dieser Isomeren (MDI), 2,4- oder 2,6-Toluylendiisocyanat oder beliebige Gemische dieser Isomeren (TDI), Gemische aus MDI und MDI-Homologen (polymeres MDI oder PMDI), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diiso-cyanatodiphenyl (TODI), Dianisidindiisocyanat (DADI), Tris-(4-isocyanatophenyl)methan oder Tris-(4-isocyanatophenyl)thiophosphat; bevorzugt MDI oder TDI;
- aliphatische, cycloaliphatische oder arylaliphatische Di- oder Triisocyanate, bevorzugt 1,4-Tetramethylendiisocyanat, 2-Methylpentamethylen-1,5-diisocyanat, 1,6-Hexamethylendiisocyanat (HDI), 2,2,4- und/oder 2,4,4-Trimethyl-1,6-hexamethylendiisocyanat (TMDI), 1,10-Decamethylendiisocyanat, 1,12-Dodecamethylendiisocyanat, Lysin- oder Lysinesterdiisocyanat, Cyclohexan-1,3- oder -1,4-diisocyanat, 1-Methyl-2,4- und/oder -2,6-diisocyanatocyclohexan (H₆TDI), 1-Isocyanato-3,3,5-trimethyl-5-isocyanatomethylcyclohexan (IPDI), Perhydro-2,4'- und/oder -4,4'-diphenylmethandiisocyanat (H₁₂MDI), 1,3- oder 1,4-Bis-(isocyanatomethyl)cyclohexan, m- oder p-Xylylendiisocyanat, Tetramethyl-1,3- oder -1,4-xylylendiisocyanat, 1,3,5-Tris-(isocyanatomethyl)benzol, Bis-(1-Isocyanato-1-methylethyl)naphthalin, Dimer- oder Trimerfettsäureisocyanate wie insbesondere 3,6-Bis-(9-isocyana-tononyl)-4,5-di(1-heptenyl)cyclohexen (Dimeryldiisocyanat); bevorzugt

### H₁₂MDI oder HDI oder IPDI;.

- Oligomere oder Derivate der genannten Di- oder Triisocyanate, insbesondere abgeleitet von HDI, IPDI, MDI oder TDI, insbesondere Oligomere enthaltend Uretdion- oder Isocyanurat- oder Iminooxadiazindion-Gruppen oder verschiedene dieser Gruppen; oder zwei- oder mehrwertige Derivate enthaltend Ester- oder Harnstoff- oder Urethan- oder Biuret- oder Allophanat- oder Carbodiimid- oder Uretonimin- oder Oxadiazintrion-Gruppen oder verschiedene dieser Gruppen. Solche Polyisocyanate stellen in der Praxis üblicherweise Gemische von Substanzen mit unterschiedlichen Oligomerisierungsgraden und/oder chemischen Strukturen dar. Insbesondere weisen sie eine mittlere NCO-Funktionalität von 2.1 bis 4.0 auf.

Ein besonders bevorzugtes Polyisocyanat ist HDI, IPDI, H₁₂MDI, TDI, MDI oder eine bei Raumtemperatur flüssige Form von MDI. Eine bei Raumtemperatur flüssige Form von MDI stellt entweder durch partielle chemische Modifizierung - insbesondere Carbodiimidisierung bzw. Uretoniminbildung oder Adduktbildung mit Polyolen - verflüssigtes 4,4'-MDI dar, oder es ist ein durch Abmischen gezielt herbeigeführtes oder durch den Herstellungsprozess bedingtes Gemisch von 4,4'-MDI mit anderen MDI-Isomeren (2,4'-MDI und/oder 2,2'-MDI), und/oder MDI-Oligomeren und/oder MDI-Homologen (PMDI).

Ein geeignetes Isocyanatgruppen-haltiges Polyurethanpolymer wird insbesondere erhalten aus der Umsetzung von mindestens einem Polyol mit einer überstöchiometrischen Menge von mindestens einem Polyisocyanat. Die Umsetzung wird bevorzugt unter Feuchtigkeitsausschluss bei einer Temperatur im Bereich von 50 bis 160 °C durchgeführt, gegebenenfalls in Anwesenheit geeigneter Katalysatoren. Das NCO/OH-Verhältnis liegt bevorzugt im Bereich von 1.3/1 bis 2.5/1. Das nach der Umsetzung der OH-Gruppen im Reaktionsgemisch verbleibende Polyisocyanat, insbesondere monomeres Diisocyanat, kann entfernt werden, insbesondere mittels Destillation, was im Fall eines hohen NCO/OH-Verhältnisses bevorzugt ist. Das erhaltene Polyurethanpolymer weist bevorzugt einen Gehalt an freien Isocyanatgruppen im Bereich von 0.5 bis 10 Gewichts-%, insbesondere 1 bis 5 Gewichts-%, besonders bevorzugt 1 bis 3 Gewichts-%, auf. Gegebenenfalls kann das Polyurethanpolymer unter Mitverwendung von Weichmachern oder Lösemitteln hergestellt werden, wobei die verwendeten Weichmacher oder Lösemittel keine gegenüber Isocyanaten reaktive Gruppen enthalten.

Als Polyisocyanat zur Herstellung eines Isocyanatgruppen-haltigen Polyurethanpolymers bevorzugt sind die bereits genannten Polyisocyanate, insbesondere die Diisocyanate, insbesondere MDI, TDI, IPDI, HDI oder H₁₂MDI.

Geeignete Polyole sind handelsübliche Polyole oder Mischungen davon, insbesondere
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD). Bevorzugte Polyetherpolyole sind Polyoxypropylendiole oder Polyoxypropylentriole, oder sogenannte Ethylenoxid-terminierte (EO-endcapped) Polyoxypropylendiole oder -triole. Letztere sind Polyoxyethylen-polyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch schliesslich primäre Hydroxylgruppen aufweisen. Bevorzugte Polyetherpolyole weisen einen Ungesättigtheitsgrad von weniger als 0.02 mEq/g, insbesondere weniger als 0.01 mEq/g auf.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Bevorzugt sind Polyesterdiole aus der Umsetzung von zweiwertigen Alkoholen wie insbesondere 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie insbesondere Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure oder Hexahydrophthalsäure oder Mischungen der vorgenannten Säuren, oder Polyesterpolyole aus Lactonen wie insbesondere ε-Caprolacton. Besonders bevorzugt sind Polyesterpolyole aus Adipinsäure oder Sebacinsäure oder Dodecandicarbonsäure und Hexandiol oder Neopentylglykol.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu

Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; sowie hydrierte polyhydroxyfunktionelle Polymere oder Copolymere von Dienen.

### Geeignet sind insbesondere auch Mischungen von Polyolen.

Bevorzugt sind Polyetherpolyole, Polyesterpolyole, Polycarbonatpolyole, Poly-(meth)acrylatpolyole oder Polybutadienpolyole.

Besonders bevorzugt sind Polyetherpolyole, Polyesterpolyole, insbesondere aliphatische Polyesterpolyole, oder Polycarbonatpolyole, insbesondere aliphatische Polycarbonatpolyole.

Am meisten bevorzugt sind Polyetherpolyole, insbesondere Polyoxypropylendi- oder -triole oder Ethylenoxid-terminierte Polyoxypropylendi- oder -triole. Bevorzugt sind Polyole mit einem mittleren Molekulargewicht im Bereich von 400 bis 20'000 g/mol, bevorzugt von 1'000 bis 15'000 g/mol.

Bevorzugt sind Polyole mit einer mittleren OH-Funktionalität im Bereich von 1.6 bis 3.

Bevorzugt sind bei Raumtemperatur flüssige Polyole.

Bei der Herstellung eines Isocyanatgruppen-haltigen Polyurethanpolymers können auch Anteile von zwei- oder mehrfunktionellen Alkoholen mitverwendet werden, insbesondere 1,2-Ethandiol, 1,2-Propandiol, 1,3-Propandiol, 2-Methyl-1,3-propandiol, 1,2-Butandiol, 1,3-Butandiol, 1,4-Butandiol, 1,3-Pentandiol, 1,5-Pentandiol, 3-Methyl-1,5-pentandiol, Neopentylglykol, Dibromneopentylglykol, 1,2-Hexandiol, 1,6-Hexandiol, 1,7-Heptandiol, 1,2-Octandiol, 1,8-Octandiol, 2-Ethyl-1,3-hexandiol, Diethylenglykol, Triethylenglykol, Dipropylenglykol, Tripropylenglykol, 1,3- oder 1,4-Cyclohexandimethanol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythritol, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

Das Isocyanatgruppen-haltige Polyurethanpolymer weist bevorzugt ein mittleres Molekulargewicht im Bereich von 1'500 bis 20'000 g/mol, insbesondere 2'000 bis 15'000 g/mol, auf.

Bevorzugt ist es bei Raumtemperatur flüssig.

Bevorzugt enthält die Zusammensetzung mindestens ein Isocyanatgruppen-haltiges Polyurethanpolymer, wie vorgängig beschrieben.

Zusätzlich zu einem Isocyanatgruppen-haltigen Polyurethanpolymer kann die Zusammensetzung weiterhin mindestens ein Diisocyanat und/oder ein Oligomer oder Polymer eines Diisocyanates enthalten, insbesondere eine bei Raumtemperatur flüssige Form von MDI oder PMDI oder ein IPDI-Isocyanurat oder TDI-Oligomer oder ein gemischtes Isocyanurat auf Basis TDI/HDI oder ein HDI-Oligomer.

Bevorzugt enthält die Zusammensetzung neben mindestens einem Polyisocyanat und/oder mindestens einem Isocyanatgruppen-haltigen Polyurethanpolymer und mindestens einem latenten Härter mit Aldiminogruppe(n) der Formel (I) zusätzlich mindestens einen Weichmacher.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Für den Fall, dass die Zusammensetzung mindestens einen Weichmacher enthält, liegt der Gehalt an Weichmachern in der Zusammensetzung bevorzugt im Bereich von 1 bis 35 Gewichts-%.

Bevorzugt enthält die Zusammensetzung zusätzlich einen oder mehrere weitere Bestandteile, welche insbesondere ausgewählt sind aus der Gruppe bestehend aus Katalysatoren, Füllstoffen und Lösemitteln.

Geeignete Katalysatoren sind insbesondere Katalysatoren für die Hydrolyse der Aldiminogruppen, insbesondere organische Säuren, insbesondere Carbonsäuren wie 2-Ethylhexansäure, Laurinsäure, Stearinsäure, Isostearinsäure, Ölsäure, Neodecansäure, Benzoesäure, Salicylsäure oder 2-Nitrobenzoesäure, organische Carbonsäureanhydride wie Phthalsäureanhydrid, Hexahydrophthalsäureanhydrid oder Hexahydromethylphthalsäureanhydrid, Silylester von Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure oder insbesondere Salicylsäure.

Geeignete Katalysatoren sind weiterhin Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Geeignet sind insbesondere auch Kombinationen von verschiedenen Katalysatoren.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Geeignete Lösemittel sind insbesondere Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Toluol, Xylol, Heptan, Octan, Naphtha, White Spirit, Petrolether oder Benzin, insbesondere Solvesso^{™}-Typen (von Exxon), weiterhin Methylenchlorid, Propylencarbonat, Butyrolacton, N-Methylpyrrolidon oder N-Ethylpyrrolidon.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Farbstoffe;
- Trocknungsmittel, insbesondere Molekularsiebpulver, Calciumoxid, hochreaktive Isocyanate wie p-Tosylisocyanat, monomere Diisocyanate, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- latente Härter oder Vernetzer, insbesondere Ketimine, Enamine, Oxazolidine oder Aldimine mit nicht der Formel (I) entsprechenden Aldiminogruppen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in feuchtigkeitshärtenden Zusammensetzungen eingesetzte Substanzen.

Es kann sinnvoll sein, gewisse Substanzen vor dem Einmischen in die Zusammensetzung chemisch oder physikalisch zu trocknen.

In der Zusammensetzung liegt das Verhältnis zwischen Aldiminogruppen und Isocyanatgruppen bevorzugt im Bereich von 0.05 bis 1.1, besonders bevorzugt 0.1 bis 1.0, insbesondere 0.2 bis 0.9.

Die Zusammensetzung enthält bevorzugt einen Gehalt an Polyisocyanaten und Isocyanatgruppen-haltigen Polyurethanpolymeren im Bereich von 5 bis 90 Gewichts-%, insbesondere 10 bis 80 Gewichts-%.

Die Zusammensetzung wird insbesondere unter Ausschluss von Feuchtigkeit hergestellt und bei Umgebungstemperatur in einem feuchtigkeitsdichten Gebinde aufbewahrt. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, ein Kanister, eine Büchse, ein Beutel, ein Schlauchbeutel, eine Kartusche oder eine Tube dar.

Die Zusammensetzung kann in Form einer einkomponentigen oder in Form einer mehrkomponentigen, insbesondere zweikomponentigen, Zusammensetzung vorliegen.

Als "einkomponentig" wird eine Zusammensetzung bezeichnet, bei welcher alle Bestandteile der Zusammensetzung im gleichen Gebinde vorliegen und welche als solche lagerstabil ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die Zusammensetzung ist bevorzugt einkomponentig. Sie ist bei geeigneter Verpackung und Aufbewahrung lagerstabil, typischerweise während mehreren Monaten bis zu einem Jahr oder länger.

Bei der Applikation der Zusammensetzung beginnt der Prozess der Aushärtung. Als Ergebnis davon entsteht die ausgehärtete Zusammensetzung.

Im Fall einer einkomponentigen Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator enthält oder freisetzt, zugemischt werden, oder die Zusammensetzung kann nach ihrer Applikation mit einer solchen Beschleuniger-Komponente in Kontakt gebracht werden.

Im Fall einer zweikomponentigen Zusammensetzung wird diese nach dem Vermischen der beiden Komponenten appliziert und beginnt dabei durch interne Reaktion auszuhärten, wobei die Aushärtung gegebenenfalls durch die Einwirkung von externer Feuchtigkeit vervollständigt wird. Das Vermischen der beiden Komponenten kann kontinuierlich oder batchweise mit dynamischen Mischern oder Statikmischern erfolgen.

Bei der Aushärtung reagieren die Isocyanatgruppen unter dem Einfluss von Feuchtigkeit mit den Aldiminogruppen des Polyaldimins der Formel (I) und gegebenenfalls vorhandenen weiteren blockierten Aminogruppen. Ein Teil der Isocyanatgruppen, insbesondere die gegenüber den Aldiminogruppen überschüssigen, reagieren unter dem Einfluss von Feuchtigkeit untereinander und/oder mit gegebenenfalls in der Zusammensetzung vorhandenen weiteren Reaktivgruppen, insbesondere Hydroxylgruppen oder freien Aminogruppen. Die Gesamtheit dieser zur Aushärtung der Zusammensetzung führenden Reaktionen der Isocyanatgruppen wird auch als Vernetzung bezeichnet.

Die zur Aushärtung einer einkomponentigen Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung ("Haut"). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die zur Vervollständigung der Aushärtung einer zweikomponentigen Zusammensetzung gegebenenfalls benötigte externe Feuchtigkeit stammt bevorzugt aus der Luft und/oder aus den Substraten.

Die Zusammensetzung wird bevorzugt bei Umgebungstemperatur appliziert, insbesondere im Bereich von etwa 0 bis 50°C, bevorzugt im Bereich von 5 bis 40°C.

Die Aushärtung der Zusammensetzung erfolgt bevorzugt ebenfalls bei Umgebungstemperatur.

Die Zusammensetzung verfügt über eine vergleichsweise lange Offenzeit.

Als "Offenzeit" wird die Zeitspanne bezeichnet, während der die Zusammensetzung verarbeitet oder nachbearbeitet werden kann, nachdem der Aushärtungsprozess begonnen hat.

Die Zeit bis zur Ausbildung einer Haut ("Hautbildungszeit") bzw. bis zur Klebefreiheit ("tack-free time") stellt dabei ein Mass für die Offenzeit dar.

Bei der Vernetzung wird ein Aldehyd der Formel (VI) freigesetzt. Dieser ist weitgehend unflüchtig und geruchlos und verbleibt zum grössten Teil in der ausgehärteten Zusammensetzung. Dort verhält er sich bzw. wirkt wie ein Weichmacher. Als solcher kann er grundsätzlich selber migrieren und/oder die Migration von Weichmachern beeinflussen. Der Aldehyd der Formel (VI) ist mit der ausgehärteten Zusammensetzung sehr gut verträglich, migriert selber kaum und löst auch keine verstärkte Migration von Weichmachern aus.

Die Zusammensetzung wird verwendet als elastische(r) Klebstoff, Dichtstoff oder Beschichtung für mindestens ein Substrat und/oder mindestens eine Deckschicht, welche empfindlich sind auf Weichmachermigration.

Solche Verwendungen finden sich im Bau- und im Industriebereich. Bevorzugte Verwendungen im industriellen Bereich sind Montageklebstoffe und Nahtabdichtungen, welche auf Spannungsriss-bildende Kunststoffe appliziert oder überlackiert oder überklebt werden.

Bevorzugte Verwendungen im Baubereich sind Dichtstoffe für das elastische

Abdichten von Fugen, wobei eine oder beide Fugenflanken aus porösen Materialien bestehen oder welche überstrichen oder überlackiert werden, beispielsweise für das Verfugung von Zwischen- und Hohlräumen im Tiefbau beispielsweise bei Strassen, Rollbahnen, Plätzen oder Brücken, oder im Hochbau, beispielsweise bei Fassaden Badezimmern oder Küchen.

Weitere bevorzugte Anwendungen im Baubereich sind elastische Klebstoffe für Holz oder Parkett.

Weitere bevorzugte Anwendungen im Baubereich sind elastische Waterproofing-Beschichtungen auf Dächern oder Balkonen oder rissüberbrückende Beschichtungen für Parkhäuser oder Brücken.

Die Zusammensetzung kann so formuliert sein, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, beispielsweise in Form einer Raupe, wobei diese eine im Wesentlichen runde oder dreieckige Querschnittsfläche aufweisen kann.

Die Zusammensetzung kann weiterhin so formuliert sein, dass sie flüssig und sogenannt selbstverlaufend oder nur leicht thixotrop ist und zur Applikation ausgegossen werden kann. Als Beschichtung kann sie beispielsweise anschliessend flächig bis zur erwünschten Schichtdicke verteilt werden, beispielsweise mittels einer Rolle, einem Schieber, einer Zahntraufel oder einer Spachtel. Dabei wird in einem Arbeitsgang typischerweise eine Schichtdicke im Bereich von 0.5 bis 3 mm, insbesondere 1.0 bis 2.5 mm, aufgetragen.

Geeignete Substrate, welche mit der Zusammensetzung verklebt oder abgedichtet oder beschichtet werden können, sind insbesondere
- Glas, Glaskeramik, Beton, Mörtel, Faserzement, insbesondere Faserzement-Platten, Backstein, Ziegel, Gips, insbesondere Gips-Platten, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Dabei ist entweder mindestens ein Substrat empfindlich auf Weichmachermigration oder die Zusammensetzung steht nach ihrer Applikation in Kontakt mit mindestens einer Deckschicht, welche empfindlich ist auf Weichmachermigration.

Ein weiterer Gegenstand der Erfindung ist ein aus der erfindungsgemässen Verwendung erhaltener Klebe- oder Abdichtungs- oder Beschichtungs-Verbund, umfassend
- die gegebenenfalls ausgehärtete Zusammensetzung, wie vorgängig beschrieben, und
- das an die Zusammensetzung anhaftende, auf Weichmachermigration empfindliche Substrat und/oder die an die Zusammensetzung anhaftende, auf Weichmachermigration empfindliche Deckschicht, wie vorgängig beschrieben.
Bevorzugt stellt der Verbund eine elastische Abdichtung dar und umfasst entweder
- ein auf Weichmachermigration empfindliches Substrat,
- die daran anhaftende ausgehärtete Zusammensetzung,
- gegebenenfalls ein an die Zusammensetzung anhaftendes weiteres Substrat, und
- gegebenenfalls eine an die Zusammensetzung anhaftende Deckschicht, welche insbesondere ein Farbanstrich, ein Lack, eine Beschichtung, eine Abdichtungsschicht oder eine Schutzfolie ist;
oder
- ein Substrat,
- die daran anhaftende ausgehärtete Zusammensetzung,
- eine an die Zusammensetzung anhaftende Deckschicht, welche insbesondere ein Farbanstrich, ein Lack, eine Beschichtung, eine Abdichtungsschicht oder eine Schutzfolie ist, und
- gegebenenfalls ein an die Zusammensetzung anhaftendes weiteres Substrat.

Bei einer Abdichtung zwischen zwei Substraten können die beiden Substrate jeweils aus dem gleichen Material oder aus voneinander verschiedenen Materialien bestehen.

In einem solchen Abdichtungs-Verbund liegt die Dicke der Schicht aus ausgehärteter Zusammensetzung typischerweise im Bereich von 0.5 bis 70 mm, insbesondere 2 bis 50 mm.

Die Dicke der Deckschicht in Form eines Farbanstrichs oder eines Lacks liegt typischerweise im Bereich von 0.03 bis 2 mm, insbesondere 0.05 bis 1 mm. Die Dicke der Deckschicht in Form einer Beschichtung liegt typischerweise im Bereich von 1 bis 10 mm, insbesondere 1.5 bis 5 mm.

Die Dicke der Deckschicht in Form einer Abdichtungsschicht liegt typischerweise im Bereich von 1 bis 50 mm, insbesondere 2 bis 30 mm.

Die Dicke der Deckschicht in Form einer Schutzfolie liegt typischerweise im Bereich von 0.01 bis 3 mm, insbesondere 0.05 bis 1.5 mm.

Ein solcher Verbund in Form einer elastischen Abdichtung kann beispielsweise eine abgedichtete Fuge darstellen, beispielsweise eine Dilatationsfuge zwischen Betonelementen, eine Bodenfuge zwischen Marmorplatten oder eine Fuge zwischen zwei Bauteilen auf einem Schiffsdeck aus Holz. Dabei haftet die Zusammensetzung an einem oder zwei porösen, auf Weichmachermigration empfindlichen Substraten. Im Beispiel der Bodenfuge zwischen Marmorplatten entstehen bei Weichmachermigration dunkel gefärbte, speckige Streifen neben den Fugenflanken, welche das optische Erscheinungsbild des edlen Bodens stark stören und durch Reinigung praktisch nicht entfernbar sind.

Ein solcher Verbund in Form einer elastischen Abdichtung kann weiterhin beispielsweise eine überlackierte Nahtabdichtung, beispielsweise im Karrosseriebereich von Fahrzeugen, oder eine mit einem Farbanstrich überstrichene Fuge, beispielsweise an einem Bauwerk, darstellen. Bei Weichmachermigration kann der Lack oder der Farbanstrich so geschädigt werden, dass seine Aushärtung gestört ist oder nachträgliche eine Erweichung, Quellung oder Klebrigkeit auftritt. Dabei kann auch eine geringfügige Veränderung der Deckschicht zu Problemen führen, denn beim Überlackieren oder Überstreichen wird oft nicht nur der Dichtstoff, sondern ein grösserer Bereich überstrichen, beispielsweise ein ganzes Karrosserie-Bauteil oder ein grösserer Bereich der Fassade. Wenn dabei durch Weichmachermigration eine kleine optische Veränderung in Farbe, Glanz oder Verschmutzungsgrad im direkt über dem Dichtstoff gelegenen Bereich auftritt, werden auch kleine Veränderungen in Farbe oder Glanz der Deckschicht als unschöne Streifen oder Schatten sichtbar.

Ein solcher Verbund in Form einer elastischen Abdichtung kann weiterhin beispielsweise ein Nahtabdichtung im Karrosseriebereich von Fahrzeugen darstellen, welche mit einer Schutzfolie bedeckt ist. Eine solche Schutzfolie kann beispielsweise dazu dienen, Verschmutzungen des Bauteils vor der Lackierung zu verhindern und soll vor der Lackierung einfach entfernt werden können. Bei Weichmachermigration kann es passieren, dass die Schutzfolie im Bereich der abgedichteten Naht so verändert ist, dass sie sich dort nicht wie gewünscht ablösen lässt.

Ein solcher Verbund in Form einer elastischen Abdichtung kann weiterhin beispielsweise eine abgedichtete Fuge darstellen, bei welcher der Dichtstoff zweischichtig mit zwei unterschiedlichen Materialien appliziert ist. Eine solche zweischichtige Fuge kommt beispielsweise beim Verfugen von tiefen Fugen zwischen wasserundurchlässigen Substraten vor, wobei der Zusammensetzung bei der Applikation für ein zuverlässiges Aushärten in der tiefen Schicht eine wasserhaltige Komponente beigemischt wird und der obere Bereich der Fuge mit einem zweiten Dichtstoff, welcher besonders gute Oberflächeneigenschaften aufweist, sich aber nicht für das Einmischen einer wasserhaltigen Komponente eignet, verfüllt wird. Dabei sollen die guten Oberflächeneigenschaften des oben liegenden Dichtstoffs nicht durch Weichmachermigration aus dem unten liegenden Dichtstoff in Form der ausgehärteten Zusammensetzung gestört werden.

Weiterhin bevorzugt stellt der Verbund eine elastische Verklebung dar und umfasst entweder a)
- ein auf Weichmachermigration empfindliches erstes Substrat,
- die daran anhaftende ausgehärtete Zusammensetzung, und
- ein an die Zusammensetzung anhaftendes zweites Substrat;
oder b)
- ein erstes Substrat,
- die daran anhaftende ausgehärtete Zusammensetzung,
- ein an die Zusammensetzung anhaftendes zweites Substrat, und
- eine an die Zusammensetzung anhaftende Deckschicht, welche insbesondere ein Farbanstrich, ein Lack, eine Beschichtung oder eine Abdichtungs- und/oder Klebeschicht ist;
oder c)
- ein erstes Substrat,
- die daran anhaftende ausgehärtete Zusammensetzung,
- eine an die Zusammensetzung anhaftende Deckschicht, welche insbesondere eine Klebeschicht ist, und
- ein an die Deckschicht gebundenes zweites Substrat.

Die beiden Substrate im Klebe-Verbund können jeweils aus dem gleichen Material oder aus voneinander verschiedenen Materialien bestehen. Oft bestehen sie aus verschiedenen Materialien.

Der Begriff "Abdichtungs- und/oder Klebeschicht" bezieht sich darauf, dass die Schicht sowohl eine abdichtende als auch eine klebende Funktion erfüllen kann.

Die Dicke der Schicht aus ausgehärteter Zusammensetzung in einem solchen Klebe-Verbund liegt typischerweise im Bereich von 0.5 bis 50 mm, insbesondere 1 bis 35 mm.

Die Dicke der Deckschicht in Form eines Farbanstrichs oder eines Lacks liegt typischerweise im Bereich von 0.03 bis 2 mm, insbesondere 0.05 bis 1 mm. Die Dicke der Deckschicht in Form einer Beschichtung liegt typischerweise im Bereich von 1 bis 10 mm, insbesondere 1.5 bis 5 mm.

Die Dicke der Deckschicht in Form der Abdichtungs- und/oder Klebeschicht oder der Klebeschicht liegt typischerweise im Bereich von 1 bis 50 mm, insbesondere 2 bis 30 mm.

Ein Klebe-Verbund, welcher dem Fall a) entspricht, ist beispielsweise eine Verklebung von Holz oder Karton mit einem zweiten Substrat, wobei bei Weichmachermigration Flecken in den Substraten entstehen können, oder eine Verklebung von einem auf Spannungsriss-Bildung empfindlichen Kunststoff mit einem zweiten Substrat, wobei bei Weichmacherwanderung schon bei kleinen Spannungen im Bereich des Klebstoffs Spannungsrisse im Kunststoff auftreten können, welche die Funktion und das optische Erscheinungsbild der Verklebung stören.

Ein Klebe-Verbund, welcher dem Fall b) entspricht, ist beispielsweise eine überlackierte Verklebung von zwei Substraten, wobei der Lack bei Weichmachermigration auf die bereits beschriebene Weise geschädigt werden kann, oder eine Verklebung von zwei oder drei Substraten, bei welcher zwischen zwei Substraten eine Fuge vorhanden ist, welche mit einem Dicht- und/oder Klebstoff gefüllt ist, wobei dieser Dicht- und/oder Klebstoff von der ausgehärteten Zusammensetzung verschieden ist und die Deckschicht darstellt. Eine solche Situation besteht beispielsweise beim Ankleben von Paneelen mit einem elastischen Klebstoff an eine Wand oder auf ein Gerüst, wobei die Fugen zwischen den Paneelen nur teilweise mit dem elastischen Klebstoff gefüllt sind und diese Fugen mit einem weiteren, beispielsweise weniger elastischen, aber besonders waschbeständigen Dicht- und/oder Klebstoff verfugt werden, wobei die beiden Materialien aneinander haften. Bei Weichmachermigration kann die oben liegende Abdichtungs- und/oder Klebeschicht so geschädigt werden, dass ihre Funktion, insbesondere ihr optisches Erscheinungsbild oder ihre Waschbeständigkeit, darunter leidet.

Ein Klebe-Verbund, welcher dem Fall c) entspricht, entsteht beispielsweise im Reparaturfall einer elastisch verklebten Windschutzscheibe, wobei die defekte Scheibe herausgeschnitten wird und ein Teil des ausgehärteten alten Klebstoffs zurückbleibt. Auf diesen alten ausgehärteten Klebstoff wird die neue Scheibe mit einem frischen Klebstoff eingeklebt. Bei Weichmachermigration zwischen den beiden Klebstoffen kann dabei eine Schwächung der Verklebung entstehen.

Weiterhin bevorzugt stellt der Verbund eine elastische Beschichtung dar und umfasst
- ein Substrat,
- die daran anhaftende ausgehärtete Zusammensetzung, und
- eine an die Zusammensetzung anhaftende Deckschicht, welche insbesondere ein Farbanstrich, ein Lack oder eine Beschichtung ist.

Die Dicke der Schicht aus ausgehärteter Zusammensetzung in einem solchen Beschichtungs-Verbund liegt typischerweise im Bereich von 1 bis 10 mm, bevorzugt 1.5 bis 7 mm, insbesondere 2 bis 6 mm und kann in einem oder in mehreren Arbeitsgängen appliziert worden sein.

Die Dicke der Deckschicht in Form eines Farbanstrichs oder eines Lacks liegt typischerweise im Bereich von 0.03 bis 2 mm, insbesondere 0.05 bis 1 mm. Die Dicke der Deckschicht in Form einer Beschichtung liegt typischerweise im Bereich von 1 bis 10 mm, insbesondere 1.5 bis 5 mm.

Ein solcher Beschichtungs-Verbund ist beispielsweise ein rissüberbrückender Bodenbelag, beispielsweise in einem Parkhaus oder auf einer Brücke, oder eine flüssig applizierte Abdichtungsmembran auf einem Dach oder einem Balkon, welche jeweils mit einem Topcoat, Siegel, Farbanstrich oder Lack überschichtet sind, wobei bei Weichmachermigration die Deckschicht in der beschriebenen Weise geschädigt werden kann.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### verwendete Aldehyde:

Aldehyd-1: Fraktioniertes Reaktionsgemisch erhalten aus mittels HF-BF₃ katalysierter Formylierung von C₁₀₋₁₄-Alkylbenzol, enthaltend mehrheitlich verzweigte 4-(C₁₀₋₁₄-Alkyl)benzaldehyde. (mittleres Aldehyd-Equivalentgewicht 290 g/Eq)
2,2-Dimethyl-3-lauroyloxypropanal (284.4 g/mol)
Benzaldehyd (106.1 g/mol)
p-tert.Butylbenzaldehyd (162.2 g/mol)
3-Phenoxybenzaldehyd (198.2 g/mol)

Aldehyd-1 ist ein Gemisch von Aldehyden der Formel (VI), während 2,2-Dimethyl-3-lauroyloxypropanal, Benzaldehyd, p-tert.Butylbenzaldehyd und 3-Phenoxybenzaldehyd nicht der Formel (VI) entsprechen.

### Herstellung von Aldiminen:

Die **Aminzahl** (inklusive Aldiminogruppen) wurde bestimmt mittels Titration (mit 0.1N HClO₄ in Essigsäure gegen Kristallviolett).

Die **Viskosität** wurde mit einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

### Aldimin A1:

50.00 g Aldehyd-1 wurden in einem Rundkolben unter Stickstoffatmosphäre vorgelegt. Unter Rühren wurden 13.93 g 3-Aminomethyl-3,5,5-trimethylcyclohexylamin zugegeben und anschliessend die flüchtigen Bestandteile bei 80°C und 10 mbar Vakuum entfernt. Es wurde eine hellgelbe, geruchlose und pH-neutrale Flüssigkeit mit einer Viskosität bei 20°C von 21.3 Pa·s und einer Aminzahl von 150.1 mg KOH/g erhalten.

### Aldimin A2:

50.00 g Aldehyd-1 wurden in einem Rundkolben unter Stickstoffatmosphäre vorgelegt. Unter Rühren wurden 13.58 g Hexan-1,6-diamin - Lösung (70 Gew.-% in Wasser) zugegeben und anschliessend die flüchtigen Bestandteile bei 80°C und 10 mbar Vakuum entfernt. Es wurde eine hellgelbe, geruchlose und pH-neutrale Flüssigkeit mit einer Viskosität bei 20°C von 1.0 Pa·s und einer Aminzahl von 161.6 mg KOH/g erhalten.

### Aldimin A3:

50.00 g Aldehyd-1 wurden in einem Rundkolben unter Stickstoffatmosphäre vorgelegt. Unter Rühren wurden 11.14 g 1,3-Bis(aminomethyl)benzol zugegeben und anschliessend die flüchtigen Bestandteile bei 80°C und 10 mbar Vakuum entfernt. Es wurde eine blassgelbe, geruchlose und pH-neutrale Flüssigkeit mit einer Viskosität bei 20°C von 2.6 Pa·s und einer Aminzahl von 155.7 mg KOH/g erhalten.

### Aldimin A4:

50.00 g Aldehyd-1 wurden in einem Rundkolben unter Stickstoffatmosphäre vorgelegt. Unter Rühren wurden 11.63 g 1,3-Bis(aminomethyl)cyclohexan zugegeben und anschliessend die flüchtigen Bestandteile bei 80°C und 10 mbar Vakuum entfernt. Es wurde eine hellgelbe, geruchlose und pH-neutrale Flüssigkeit mit einer Viskosität bei 20°C von 6.1 Pa·s und einer Aminzahl von 153.0 mg KOH/g erhalten.

### Aldimin A5:

50.00 g Aldehyd-1 wurden in einem Rundkolben unter Stickstoffatmosphäre vorgelegt. Unter Rühren wurden 17.21 g 4,4'-Diaminodicyclohexylmethan zugegeben und anschliessend die flüchtigen Bestandteile bei 80°C und 10 mbar Vakuum entfernt. Es wurde eine hellgelbe, geruchlose und pH-neutrale Flüssigkeit mit einer Viskosität bei 20°C von 59.6 Pa·s und einer Aminzahl von 140.2 mg KOH/g erhalten.

### Aldimin A6:

50.00 g Aldehyd-1 wurden in einem Rundkolben unter Stickstoffatmosphäre vorgelegt. Unter Rühren wurden 8.85 g 1,4-Phenylendiamin zugegeben und anschliessend die flüchtigen Bestandteile bei 80°C und 10 mbar Vakuum entfernt. Es wurde eine orangebraune, geruchlose und pH-neutrale Flüssigkeit mit einer Viskosität bei 20°C von 4.9 Pa·s und einer Aminzahl von 163.0 mg KOH/g erhalten.

### Aldimin A7:

25.00 g Aldehyd-1 wurden in einem Rundkolben unter Stickstoffatmosphäre vorgelegt. Unter Rühren wurden 8.60 g 2-(2-Aminoethoxy)ethanol zugegeben und anschliessend die flüchtigen Bestandteile bei 80°C und 10 mbar Vakuum entfernt. Es wurde eine blassgelbe, geruchlose und pH-neutrale Flüssigkeit mit einer Viskosität bei 20°C von 0.4 Pa·s und einer Aminzahl von 142.9 mg KOH/g erhalten.

### Aldimin A8:

25.00 g Aldehyd-1 wurden in einem Rundkolben unter Stickstoffatmosphäre vorgelegt. Unter Rühren wurden 14.02 g 3-Aminomethyl-3,5,5-trimethylcyclohexanol zugegeben und anschliessend die flüchtigen Bestandteile bei 80°C und 10 mbar Vakuum entfernt. Es wurde eine blassgelbe, geruchlose und pH-neutrale Flüssigkeit mit einer Viskosität bei 20°C von 34.3 Pa·s und einer Aminzahl von 122.3 mg KOH/g erhalten.

### Aldimin R1:

50.00 g 2,2-Dimethyl-3-lauroyloxypropanal wurden in einem Rundkolben unter Stickstoffatmosphäre vorgelegt. Unter Rühren wurden 13.93 g 3-Aminomethyl-3,5,5-trimethylcyclohexylamin zugegeben und anschliessend die flüchtigen Bestandteile bei 80°C und 10 mbar Vakuum entfernt. Es wurde eine blassgelbe, geruchlose Flüssigkeit mit einer Aminzahl von 153.0 mg KOH/g erhalten.

### Aldimin R2:

50.00 g 2,2-Dimethyl-3-lauroyloxypropanal wurden in einem Rundkolben unter Stickstoffatmosphäre vorgelegt. Unter Rühren wurden 13.88 g Hexan-1,6-diamin - Lösung (70 Gew.-% in Wasser) zugegeben und anschliessend die flüchtigen Bestandteile bei 80°C und 10 mbar Vakuum entfernt. Es wurde eine fast farblose, geruchlose Flüssigkeit mit einer Aminzahl von 165.0 mg KOH/g erhalten.

### Aldimin R3:

50.00 g 2,2-Dimethyl-3-lauroyloxypropanal wurden in einem Rundkolben unter Stickstoffatmosphäre vorgelegt. Unter Rühren wurden 11.39 g 1,3-Bis(aminomethyl)benzol zugegeben und anschliessend die flüchtigen Bestandteile bei 80°C und 10 mbar Vakuum entfernt. Es wurde eine fast farblose, geruchlose Flüssigkeit mit einer Aminzahl von 160.9 mg KOH/g erhalten.

### Aldimin R4:

50.00 g 2,2-Dimethyl-3-lauroyloxypropanal wurden in einem Rundkolben unter Stickstoffatmosphäre vorgelegt. Unter Rühren wurden 9.05 g 1,4-Phenylendiamin zugegeben und anschliessend die flüchtigen Bestandteile bei 80°C und 10 mbar Vakuum entfernt. Es wurde eine hellbraune, geruchlose Flüssigkeit mit einer Aminzahl von 167.6 mg KOH/g erhalten.

### Aldimin R5:

24.46 g 2,2-Dimethyl-3-lauroyloxypropanal wurden in einem Rundkolben unter Stickstoffatmosphäre vorgelegt. Unter Rühren wurden 8.60 g 2-(2-Aminoethoxy)ethanol zugegeben und anschliessend die flüchtigen Bestandteile bei 80°C und 10 mbar Vakuum entfernt. Es wurde eine fast farblose, geruchlose Flüssigkeit mit einer Aminzahl von 144.3 mg KOH/g erhalten.

### Aldimin R6:

33.43 g Benzaldehyd wurden in einem Rundkolben unter Stickstoffatmosphäre vorgelegt. Unter Rühren wurden 25.55 g IPDA zugegeben und anschliessend die flüchtigen Bestandteile bei 80°C und 10 mbar Vakuum entfernt. Erhalten wurde eine hellgelbe, geruchsintensive Flüssigkeit mit einer Aminzahl von 314.1 mg KOH/g, welche nach einigen Tagen kristallisierte.

### Aldimin R7:

27.87 g p-tert.Butylbenzaldehyd wurden in einem Rundkolben unter Stickstoffatmosphäre vorgelegt. Unter Rühren wurden 13.93 g IPDA zugegeben und anschliessend die flüchtigen Bestandteile bei 80°C und 10 mbar Vakuum entfernt. Erhalten wurde eine hellgelbe, geruchsintensive, hochviskose Flüssigkeit mit einer Aminzahl von 236.2 mg KOH/g, welche nach einigen Tagen kristallisierte. Die Viskosität bei 80°C betrug 23.7 Pa·s.

### Aldimin R8:

34.06 g 3-Phenoxybenzaldehyd wurden in einem Rundkolben unter Stickstoffatmosphäre vorgelegt. Unter Rühren wurden 13.93 g IPDA zugegeben und anschliessend die flüchtigen Bestandteile bei 80°C und 10 mbar Vakuum entfernt. Erhalten wurde eine hellgelbe, geruchsarme, hochviskose Flüssigkeit mit einer Aminzahl von 203.8 mg KOH/g, welche nach einigen Tagen kristallisierte. Die Viskosität bei 80°C betrug 5.1 Pa·s.

Die Aldimine **A1** bis **A6** sind Polyaldimine der Formel (III); die Aldimine **R1** bis **R4** und **R6** bis **R8** dienen als Vergleich.

Die Aldimine **A7** und **A8** sind Aldimine der Formel (IV); das Aldimin **R5** dient als Vergleich.

### Herstellung von Isocyanatgruppen-haltigen Polymeren

### Polymer P1:

300.0 g Polyoxypropylenpolyoxyethylen-Diol (Desmophen^{®} L300, von Covestro; OH-Zahl 190.0 mg KOH/g) und 228.8 g Isophorondiisocyanat (Vestanat^{®} IPDI, Degussa) wurden nach bekanntem Verfahren bei 60°C zu einem bei Raumtemperatur flüssigen, NCO-terminierten Polyurethanpolymer mit einem Gehalt an freien Isocyanatgruppen von 8.35 Gewichts-% umgesetzt.

### Polymer P2:

590 g Polyoxypropylen-Diol (Acclaim^{®} 4200, von Covestro; OH-Zahl 28.5 mg KOH/g), 1180 g Polyoxypropylenpolyoxyethylen-Triol (Caradol^{®} MD34-02, von Shell; OH-Zahl 35.0 mg KOH/g) und 230 g Isophorondiisocyanat (Vestanat^{®} IPDI, Degussa) wurden nach bekanntem Verfahren bei 80°C zu einem bei Raumtemperatur flüssigen, NCO-terminierten Polyurethanpolymer mit einem Gehalt an freien Isocyanatgruppen von 2.10 Gewichts-% umgesetzt.

### Polymer P3:

3080 g Polyoxypropylen-Diol (Acclaim^{®} 4200, von Covestro; OH-Zahl 28.5 mg KOH/g), 1540 g Polyoxypropylenpolyoxyethylen-Triol (Caradol^{®} MD34-02, von Shell; OH-Zahl 35.0 mg KOH/g) und 385 g Toluylendiisocyanat (Desmodur^{®} T 80 P, Covestro) wurden bei 80°C nach bekanntem Verfahren zu einem bei Raumtemperatur flüssigen, NCO-terminierten Polyurethanpolymer mit einem Gehalt an freien Isocyanatgruppen von 1.50 Gew.-% umgesetzt.

### Polymer P4:

4000 g Polyoxypropylen-Diol (Acclaim^{®} 4200, von Covestro; OH-Zahl 28.5 mg KOH/g) und 520 g 4,4'-Diphenylmethandiisocyanat (Desmodur^{®} 44 MC L, von Covestro) wurden nach bekanntem Verfahren bei 80°C zu einem bei Raumtemperatur flüssigen, NCO-terminierten Polyurethanpolymer mit einem Gehalt an freien Isocyanatgruppen von 1.85 Gewichts-% umgesetzt.

### Herstellung von Umsetzungsprodukten:

### Umsetzungsprodukt U1:

60.00 g (ca. 115.3 mmol NCO) Polymer **P1,** 15.82 g (ca. 40.4 mmol) Aldimin **A7** und 0.05 g Coscat^{®} 83 wurden in einem Honigglas unter Argon vermischt und anschliessend während 16 Stunden in einem Umluftofen bei 60°C reagieren lassen. Es wurde ein klares, bei Raumtemperatur flüssiges Aldimin- und Isocyanatgruppen aufweisendes Umsetzungsprodukt erhalten.

### Umsetzungsprodukt U2:

60.00 g (ca. 115.3 mmol NCO) Polymer **P1,** 18.51 g (ca. 40.4 mmol) Aldimin **A8** und 0.05 g Coscat^{®} 83 wurden in einem Honigglas unter Argon vermischt und anschliessend während 16 Stunden in einem Umluftofen bei 60°C reagieren lassen. Es wurde ein klares, bei Raumtemperatur flüssiges Aldimin- und Isocyanatgruppen aufweisendes Umsetzungsprodukt erhalten.

### Umsetzungsprodukt Q1:

60.00 g (ca. 115.3 mmol NCO) Polymer **P1,** 15.69 g (ca. 40.4 mmol) Aldimin **R5** und 0.05 g Coscat^{®} 83 wurden in einem Honigglas unter Argon vermischt und anschliessend während 16 Stunden in einem Umluftofen bei 60°C reagieren lassen. Es wurde ein klares, bei Raumtemperatur flüssiges Aldimin- und Isocyanatgruppen aufweisendes Umsetzungsprodukt erhalten.

Die Umsetzungsprodukte **U1** und **U2** sind Umsetzungsprodukte mit Aldiminogruppe(n) der Formel (V), welche auch nicht umgesetztes Polymer **P1** enthalten. Das Umsetzungsprodukt **Q1** dient als Vergleich.

### Einkomponentige Zusammensetzungen

### Zusammensetzungen Z1 bis Z6 und Ref1 bis Ref5

Für jede Zusammensetzung wurden die in den Tabellen 1 und 2 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt und unter Feuchtigkeitsausschluss aufbewahrt. Jede Zusammensetzung wurde folgendermassen geprüft:
Als Mass für die Weichmachermigration wurde die Fleckenbildung auf Karton bestimmt. Dazu wurde jede Zusammensetzung so auf ein Stück Pappkarton appliziert, dass sie eine runde Grundfläche von 12 mm Durchmesser und eine Höhe von 20 mm aufwies, und während 7 Tagen im NK gelagert. Um jede Zusammensetzung herum war danach auf dem Karton ein dunkler ovaler Fleck entstanden. Dessen Ausmasse (Höhe und Breite) wurden ausgemessen und in der Tabelle 1 als **Migration** angegeben.

Bei den Zusammensetzungen **Z1** bis **Z6** handelt es sich um erfindungsgemässe Beispiele. Bei den Zusammensetzungen **Ref1** bis **Ref5** handelt es sich um Vergleichsbeispiele.

Die Zusammensetzungen **Z1** bis **Z6** sind geeignet als elastische Klebstoffe, Dichtstoffe oder insbesondere Beschichtungen.

**Tabelle 1: Zusammensetzung (in Gewichtsteilen) und Eigenschaften von Z1 bis Z4 und Ref1 bis Ref 4.**

| **Zusammensetzung** | | **Z1** | **Ref1** | **Z2** | **Ref2** | **Z3** | **Ref3** | **Z4** | **Ref4** |
|---|---|---|---|---|---|---|---|---|---|
| **Polymer P1** | | 15.00 | 15.00 | 15.00 | 15.00 | 15.00 | 15.00 | 15.00 | 15.00 |
| Kreide¹ | | 15.00 | 15.00 | 15.00 | 15.00 | 15.00 | 15.00 | 15.00 | 15.00 |
| Kieselsäure² | | 1.13 | 1.13 | 1.13 | 1.13 | 1.13 | 1.13 | 1.13 | 1.13 |
| **Aldimin** | | **A1** 7.80 | **R1** 7.65 | **A2** 7.25 | **R2** 7.10 | **A3** 7.41 | **R3** 7.28 | **A6** 7.13 | **R4** 6.97 |
| Dibutylzinndilaurat-Lösung³ | | 1.50 | 1.50 | 1.50 | 1.50 | 1.50 | 1.50 | 1.50 | 1.50 |
| Salicylsäure-Lösung⁴ | | 3.00 | 3.00 | 3.00 | 3.00 | 3.00 | 3.00 | 3.00 | 3.00 |
| Migration | Höhe | 80 | 110 | 45 | 130 | 110 | 120 | 65 | 135 |
| [mm] | Breite | 55 | 85 | 40 | 90 | 85 | 95 | 50 | 95 |

| | | | | | | | | | |
|---|---|---|---|---|---|---|---|---|---|
| ¹ gemahlenes, mit Fettsäure beschichtetes Calciumcarbonat ² hydrophob modifizierte pyrogene Kieselsäure ³ 5% in Diisodecylphthalat ⁴ 5% in Dioctyladipat | | | | | | | | | |

**Tabelle 2: Zusammensetzung (in Gewichtsteilen) und Eigenschaften von Z5 und Z6 und Ref5.**

| **Zusammensetzung** | | **Z5** | **Z6** | **Ref5** |
|---|---|---|---|---|
| **Umsetzungsprodukt** | | **U1** | **U2** | **Q1** |
| | | 25.0 | 25.0 | 25.0 |
| Kreide¹ | | 25.0 | 25.0 | 25.0 |
| Kieselsäure² | | 1.9 | 1.9 | 1.9 |
| Dibutylzinndilaurat-Lösung³ | | 2.5 | 2.5 | 2.5 |
| Salicylsäure-Lösung⁴ | | 5.0 | 5.0 | 5.0 |
| Migration | Höhe | 1 | 1 | 8 |
| [mm] | Breite | 1 | 1 | 6 |

| | | | | |
|---|---|---|---|---|
| ¹ gemahlenes, mit Fettsäure beschichtetes Calciumcarbonat ² hydrophob modifizierte pyrogene Kieselsäure ³ 5% in Diisodecylphthalat ⁴ 5% in Dioctyladipat | | | | |

### Zusammensetzungen Z7 bis Z20 und Ref6 bis Ref12

Für jede Zusammensetzung wurden die in den Tabellen 3 bis 5 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt und unter Feuchtigkeitsausschluss aufbewahrt. Jede Zusammensetzung wurde folgendermassen geprüft:
Als Mass für die Lagerstabilität wurden die **Viskosität (1d RT)** am Folgetag der Herstellung und die **Viskosität (7d 60°C)** nach einer Lagerung im verschlossenen Gebinde während 7 Tagen in einem 60°C Umluftofen bestimmt. Die Viskosität wurde jeweils bei einer Temperatur von 20°C mit einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

Als Mass für die Offenzeit wurde die Hautbildungszeit **(tack-free time)** bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde jede Zusammensetzung auf eine PTFE-beschichtete Folie zu einem Film von 2 mm Dicke ausgegossen, während 7 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung, E-Modul 5%** (bei 0.5-5% Dehnung) und **E-Modul 50%** (bei 0.5-50% Dehnung) geprüft.

Der **Aspekt** wurde visuell an den hergestellten Filmen beurteilt. Als "schön" wurde ein klarer, nichtklebriger Film ohne Blasen bezeichnet.

Zur Bestimmung der **Weichmachermigration** wurde von jeder Zusammensetzung ein Verbund hergestellt, indem die Zusammensetzung auf einer Glasplatte zu einem Film von 2 mm Dicke ausgegossen, die Oberfläche mit einem 20 mm breiten Streifen aus Polyethylenfolie bedeckt und dieser Verbund während 14 Tagen im Normklima gelagert wurde. Anschliessend wurde die Polyethylenfolie von der Oberfläche der ausgehärteten Zusammensetzung abgezogen und auf Verschmutzung in Form von Spuren von ausgetretener Flüssigkeit untersucht. Falls keine solchen Spuren vorhanden waren, wurde die Weichmachermigration mit "nein" bezeichnet, andernfalls mit "ja".

Der **Geruch** wurde durch Riechen mit der Nase im Abstand von 2 cm an den frisch hergestellten Filmen beurteilt. "Nein" bedeutet, dass kein Geruch wahrnehmbar war.

Die Resultate sind in den Tabellen 3 bis 5 angegeben.

Bei den Zusammensetzungen **Z7** bis **Z20** handelt es sich um erfindungsgemässe Beispiele. Bei den Zusammensetzungen **Ref6** bis **Ref12** handelt es sich um Vergleichsbeispiele.

Die Zusammensetzungen **Z7** bis **Z11** sind insbesondere geeignet als elastische Beschichtung, die Zusammensetzungen **Z12** bis **Z16** sind insbesondere geeignet als elastischer Dichtstoff und die Zusammensetzungen **Z17** bis **Z20** sind insbesondere geeignet als elastischer Klebstoff.

**Tabelle 3: Zusammensetzung (in Gewichtsteilen) und Eigenschaften von Z7 bis Z11 und Ref6. ¹ 5% in Dioctyladipat**

| **Zusammensetzung** | **Z7** | **Z8** | **Z9** | **Z10** | **Z11** | **Ref6** |
|---|---|---|---|---|---|---|
| **Polymer P2** | 80.00 | 80.00 | 80.00 | 80.00 | 80.00 | 80.00 |
| **Aldimin** | **A1** | **A2** | **A3** | **A4** | **A6** | **R1** |
| | 10.47 | 9.72 | 9.95 | 10.04 | 9.57 | 10.27 |
| Salicylsäurelösung¹ | 1.50 | 1.50 | 1.50 | 1.50 | 1.50 | 1.50 |
| Viskosität (1d RT) | 15.2 | 15.5 | 18.7 | 18.3 | 15.9 | 13.6 |
| [Pa·s] (7d 60°C) | 17.5 | 21.1 | 28.1 | 23.1 | 18.6 | 16.2 |
| tack-free time | 3h | 1h 40' | 1h 05' | 1h 10' | > 8h | 2h |
| Zugfestigkeit [MPa] | 1.42 | 0.95 | 1.01 | 1.21 | 1.07 | 0.98 |
| Bruchdehnung [%] | 240 | 219 | 259 | 271 | 215 | 142 |
| E-Modul 5% [MPa] | 1.72 | 0.90 | 0.95 | 1.15 | 1.23 | 1.50 |
| E-Modul 50% | 0.82 | 0.62 | 0.57 | 0.67 | 0.72 | 0.90 |
| Aspekt | schön | schön | schön | schön | schön | schön |
| Weichmachermigration | nein | nein | nein | nein | nein | ja |
| Geruch | nein | nein | nein | nein | nein | nein |

**Tabelle 4: Zusammensetzung (in Gewichtsteilen) und Eigenschaften von Z12 bis Z16 und Ref7. ¹ 5% in Dioctyladipat**

| **Zusammensetzung** | **Z12** | **Z13** | **Z14** | **Z15** | **Z16** | **Ref7** |
|---|---|---|---|---|---|---|
| **Polymer P3** | 80.00 | 80.00 | 80.00 | 80.00 | 80.00 | 80.00 |
| **Aldimin** | **A1** | **A2** | **A3** | **A4** | **A6** | **R2** |
| | 7.53 | 7.00 | 7.17 | 7.23 | 6.89 | 6.85 |
| Salicylsäurelösung¹ | 1.50 | 1.50 | 1.50 | 1.50 | 1.50 | 0.20 |
| Viskosität (1d RT) | 16.3 | 19.4 | 27.6 | 25.5 | 23.7 | 27.2 |
| [Pa·s] (7d 60°C) | 20.6 | 28.0 | 45.3 | 35.8 | 30.0 | 47.3 |
| tack-free time | 1h 35' | 45' | 40' | 46' | 2h 35' | 38' |
| Zugfestigkeit [MPa] | 0.52 | 1.22 | 1.72 | 0.94 | 1.79 | 0.73 |
| Bruchdehnung [%] | 297 | 373 | 346 | 281 | 241 | 210 |
| E-Modul 5% [MPa] | 0.41 | 1.68 | 3.54 | 1.06 | 4.60 | 1.06 |
| E-Modul 50% | 0.21 | 0.74 | 1.07 | 0.57 | 1.42 | 0.59 |
| Aspekt | schön | schön | schön | schön | schön | schön |
| Weichmachermigration | nein | nein | nein | nein | nein | ja |
| Geruch | nein | nein | nein | nein | nein | nein |

**Tabelle 5: Zusammensetzung (in Gewichtsteilen) und Eigenschaften von Z17 bis Z20 und Ref 8 und Ref12. ¹ 5% in Dioctyladipat**

| **Zusammensetzung** | **Z17** | **Z18** | **Z19** | **Z20** | **Ref8** | **Ref9** | **Ref10** | **Ref11** | **Ref12** |
|---|---|---|---|---|---|---|---|---|---|
| **Polymer P4** | 80.00 | 80.00 | 80.00 | 80.00 | 80.00 | 80.00 | 80.00 | 80.00 | 80.00 |
| **Aldimin** | **A1** 9.20 | **A2** 8.56 | **A5** 9.67 | **A6** 8.42 | **R1** 9.03 | **R4** 8.24 | **R6** 4.40 | **R7** 5.85 | **R8** 6.78 |
| Salicylsäurelösung¹ | 1.50 | 1.50 | 1.50 | 1.50 | 1.50 | 1.50 | 1.50 | 1.50 | 1.50 |
| Viskosität (1d RT) | 29.4 | 50.0 | 32.0 | 35.7 | 22.1 | 24.7 | 36.5 | 43.8 | 39.9 |
| [Pa·s] (7d 60°C) | 34.8 | 87.2 | 37.5 | 41.1 | 27.0 | 31.6 | 41.1 | 47.4 | 44.6 |
| tack-free time | 1h 20' | 1h 10' | 1h 10' | 1h 30' | 45' | 45' | 1h 30' | 2h | 1h 35' |
| Zugfestigkeit [MPa] | 1.62 | 2.91 | 3.46 | 2.10 | 1.18 | 4.86 | 1.66 | 1.44 | 0.55 |
| Bruchdehnung [%] | 1240 | 508 | 803 | 248 | 1240 | 784 | 936 | 1674 | 1098 |
| E-Modul 5% [MPa] | 0.75 | 5.66 | 1.27 | 10.30 | 1.02 | 10.9 | 1.00 | 0.79 | 0.41 |
| E-Modul 50% | 0.41 | 1.82 | 0.75 | 1.81 | 0.54 | 2.44 | 0.51 | 0.40 | 0.17 |
| Aspekt | schön | schön | schön | schön | schön | schön | schön | schön | schön |
| Weichmachermigration | nein | nein | nein | nein | ja | ja | nein | nein | nein |
| Geruch | nein | nein | nein | nein | nein | nein | stark | stark | leicht |

### Zusammensetzungen Z21 und Ref13 bis Ref17

Diese Zusammensetzungen wurden anhand der Angaben in der Tabelle 6 auf die gleiche Weise wie für Zusammensetzung **Z1** beschrieben hergestellt.

Als Mass für die Weichmacher-Migration wurde jede Zusammensetzung so auf eine Kartonunterlage appliziert, dass sie eine runde Grundfläche von 15 mm Durchmesser und eine Höhe von 4 mm aufwies, und während 3 Monaten im NK gelagert. Um jede Zusammensetzung herum entstand auf dem Karton ein dunkler ovaler Fleck, dessen Ausmasse (Höhe und Breite) nach 7 Tagen und nach 3 Monaten im NK ausgemessen und in der Tabelle 6 als **Migration** (7d) bzw. (3 Monate) angegeben wurden.

Als Mass für die Neigung zu **Spannungsrissbildung** auf Kunststoff wurde jede Zusammensetzung auf eine durchsichtige, vorgespannte Kunststoffplatte aus Polycarbonat (Makrolon^{®}) mit den Massen 150 x 30 x 2 mm so aufgetragen, dass in der Mitte der gespannten Platte eine Beschichtung von 30 x 30 x 2 mm entstand. Nach 24 h im Normklima wurde die Beschichtung bzw. die Zusammensetzung entfernt und die Platte auf Rissbildung und sonstige optische Veränderungen untersucht. Die vorgespannte Kunststoffplatte war dabei jeweils so über einem auf einem Brett angebrachten Rundholz von 12.5 mm Duchmesser fixiert, dass die lange Seite quer zum Rundholz lag und die schmalen Enden auf dem Brett fixiert waren. Als "wenig" wird die Bildung von kleinen, schwach sichtbaren Risschen von 2 bis 3 mm Länge im Randbereich der Platte bezeichnet, welche nur oberflächlich vorhanden waren. Als "stark" wird ein kompletter Riss über die ganze Breite der Platte bezeichnet, der über die gesamte Dicke der Platte sichtbar war. Zusätzlich waren dabei sehr viele kleine Risse im Randbereich der Platte vorhanden.

Der **Geruch** wurde durch Riechen mit der Nase im Abstand von 2 cm an den frisch hergestellten Prüfkörpern beurteilt.

Bei der Zusammensetzung **Z21** handelt es sich um ein erfindungsgemässes Beispiel. Bei den Zusammensetzungen **Ref13** bis **Ref17** handelt es sich um Vergleichsbeispiele.

**Tabelle 6: Zusammensetzung (in Gewichtsteilen) und Eigenschaften von Z21 und Ref13 bis Ref17.**

| **Zusammensetzung** | | **Ref13** | **Ref14** | **Ref15** | **Ref16** | **Ref17** | **Z21** |
|---|---|---|---|---|---|---|---|
| **Polymer P1** | | 15.00 | 15.00 | 15.00 | 15.00 | 15.00 | 15.00 |
| Kreide | | 15.00 | 15.00 | 15.00 | 15.00 | 15.00 | 15.00 |
| Kieselsäure | | 1.13 | 1.13 | 1.13 | 1.13 | 1.13 | 1.13 |
| **Aldimin** | | - | **R1** | **R6** | **R7** | **R8** | **A1** |
| | | | 5.46 | 2.66 | 3.54 | 4.11 | 5.57 |
| Dibutylzinndilaurat-Lösung¹ | | 1.50 | 1.50 | 1.50 | 1.50 | 1.50 | 1.50 |
| Salicylsäure-Lösung² | | 3.00 | 3.00 | 3.00 | 3.00 | 3.00 | 3.00 |
| **Migration** | Höhe | 17 | 37 | 17 | 16 | 17 | 18 |
| **(7d)** [mm] | Breite | 17 | 41 | 19 | 16 | 19 | 19 |
| **Migration** | Höhe | 25 | 47 | 28 | 20 | 20 | 23 |
| **(3 Monate)** [mm] | Breite | 25 | 52 | 28 | 22 | 21 | 23 |
| **Spannungsrissbildung** | | wenig | stark | wenig | wenig | wenig | wenig |
| **Geruch** | | kein | kein | stark | stark | leicht | kein |

| | | | | | | | |
|---|---|---|---|---|---|---|---|
| ¹ 5% in Diisodecylphthalat ² 5% in Dioctyladipat | | | | | | | |

Aus den Resultaten zur Migration der Tabelle 6 ist ersichtlich, dass die erfindungsgemässe Zusammensetzung **Z21** mit Aldimin **A1** eine ähnliche bis sogar geringere Neigung zu Weichmachermigration aufweist als die Zusammensetzung **Ref13** ohne Aldimin, auf einem ähnlichen Niveau wie die Zusammensetzungen **Ref15** bis **Ref17** mit mehr oder weniger stark riechenden Aldiminen abgeleitet von Benzaldehyd, p-tert.Butylbenzaldehyd oder 3-Phenoxybenzaldehyd. Im Gegensatz dazu zeigt die Zusammensetzung **Ref14** mit Aldimin **R1,** welches ebenfalls einen langkettigen Substituenten enthält und ein ähnlich hohes Molekulargewicht wie Aldimin **A1** aufweist, eine starke Weichmachermigration.

### Zusammensetzungen Z22 und Ref18

Für jede Zusammensetzung wurden 100 Gewichtsteile SikaBond^{®}-T40 (einkomponentiger lösemittelfreier elastischer Polyurethanklebstoff enthaltend 0.61 Gewichts-% Isocyanatgruppen und 20.75 Gewichts-% Weichmacher; von Sika) und die in Tabelle 7 angegebenen weiteren Inhaltsstoffe in der angegebenen Menge (in Gewichtsteilen) mittels des Zentrifugalmischers unter Feuchtigkeitsausschluss während einer Minute bei 3000 rpm vermischt und aufbewahrt. Jede Zusammensetzung wurde folgendermassen geprüft:
Zur Messung der Zugscherfestigkeit (ZSF) wurden diverse Prüfkörper hergestellt, wobei die Zusammensetzung zwischen zwei mit Isopropanol entfetteten Platten aus Polycarbonat (Makrolon^{®}) in einer Schichtdicke von 3.2 mm und auf einer überlappenden Klebefläche von 30 x 20 mm aufgebracht wurde. Die Prüfkörper wurden während 14 Tagen im Normklima gelagert bzw. ausgehärtet und anschliessend die Zugscherfestigkeit nach DIN EN 1465 mit einer Zuggeschwindigkeit von 10 mm/min bestimmt und als **"ZSF auf Polycarbonat"** angegeben.

Zur Messung der Migration auf Granit wurde mit je zwei Quadern aus Granit der Dimension 25 x 12 x 75 mm eine Fuge mit einem Querschnitt von 12 × 12 mm und einer Länge von 50 mm zwischen zwei solchen Quadern hergestellt, wie in DIN EN ISO 8339 beschrieben. Jeder solche Prüfkörper wurde während 14 Tagen im Normklima gelagert bzw. ausgehärtet. Anschliessend wurde jede Fuge mittels geeigneter Klammern um 25 % gestaucht (Fugenbreite von 12 auf 9 mm zusammengedrückt) und die so gestauchte Fuge während 14 Tagen im Normklima aufbewahrt. Anschliessend wurde jeder Quader optisch auf durch migrierten Weichmacher entstandene Verfärbungen im Granit beurteilt. Als **"Migration (Granit)"** wurde die mittlere Breite des dunklen Streifens im Granit an den Fugenflanken angegeben.

Zur Messung der **Zugfestigkeit, Bruchdehnung** und der **Spannung bei 100 % Dehnung** wurden die vorgängig gestauchten Prüfkörper verwendet, wobei die Werte in Anlehnung an DIN EN ISO 8339 im Normklima bei einer Zuggeschwindigkeit von 5 mm/min bestimmt wurden.

Die Resultate sind in der Tabelle 7 angegeben.

Bei der Zusammensetzung **Z22** handelt es sich um ein erfindungsgemässes Beispiel. Bei der Zusammensetzung **Ref18** handelt es sich um ein Vergleichsbeispiel.

**Tabelle 7: Zusammensetzung (in Gewichtsteilen) und Eigenschaften von Z22 und Ref18. ¹ 5% in Dioctyladipat**

| **Zusammensetzung** | **Z22** | **Ref18** |
|---|---|---|
| SikaBond^{®}-T40 | 100.0 | 100.0 |
| Aldimin **A1** | 2.2 | - |
| Aldimin **R1** | - | 2.1 |
| Salicylsäure-Lösung¹ | 1.2 | 0.3 |
| Dioctyladipat | - | 0.9 |
| ZSF auf Polycarbonat [MPa] | 0.18 | 0.12 |
| Migration (Granit) [mm] | 1 mm | 2 mm |
| Zugfestigkeit [MPa] | 0.29 | 0.19 |
| Bruchdehnung | 415 % | 433 % |
| Spannung bei 100 % Dehnung [MPa] | 0.21 | 0.14 |

## Patentansprüche

1. Verwendung einer Zusammensetzung umfassend
- mindestens ein Polyisocyanat und/oder mindestens ein Isocyanatgruppen-haltiges Polyurethanpolymer und
- mindestens einen latenten Härter mit Aldiminogruppe(n) der Formel (I), 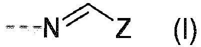 wobei Z für einen mit einer Alkyl- oder Alkoxy-Gruppe substituierten Aryl-Rest mit insgesamt 12 bis 26 C-Atomen steht,
als elastische(r) Klebstoff, Dichtstoff oder Beschichtung für mindestens ein Substrat und/oder mindestens eine Deckschicht, welche empfindlich sind auf Weichmachermigration, **dadurch gekennzeichnet, dass** das Substrat ein poröses Material oder ein Spannungsriss-bildender Kunststoff ist.

2. Verwendung gemäss Anspruch 1, **dadurch gekennzeichnet, dass** das poröse Material ausgewählt ist aus der Gruppe bestehend aus Holz, Papier, Karton, Gips, Mörtel, Faserzement, Beton und Naturstein und/oder dass der Spannungsriss-bildende Kunststoff ausgewählt ist aus der Gruppe bestehend aus Polystyrol, Polycarbonat, Polyester und Polymethylmethacrylat.

3. Verwendung gemäss einem der Ansprüche 1 bis 2, **dadurch gekennzeichnet, dass** die Deckschicht ein polymeres Material ist oder dazu aushärtet.

4. Verwendung gemäss Anspruch 3, **dadurch gekennzeichnet, dass** die Deckschicht eine Abdichtungsschicht oder eine Klebeschicht oder eine Beschichtung oder eine Schutzfolie ist.

5. Verwendung gemäss einem der Ansprüche 1 bis 4, **dadurch gekennzeichnet, dass** Z für einen Rest der Formel (II) steht, 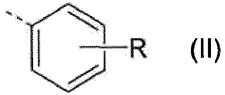 wobei R für einen linearen oder verzweigten Alkyl-Rest mit 10 bis 14 C-Atomen steht.

6. Verwendung gemäss einem der Ansprüche 1 bis 5, **dadurch gekennzeichnet, dass** der latente Härter mit Aldiminogruppe(n) der Formel (I) ein Polyaldimin der Formel (III) ist, 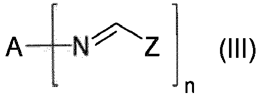 wobei
n für 2 oder 3 steht und
A für einen n-wertigen, gegebenenfalls Ether-Sauerstoff aufweisenden Kohlenwasserstoff-Rest mit einem Molekulargewicht im Bereich von 28 bis 6'000 g/mol steht.

7. Verwendung gemäss einem der Ansprüche 1 bis 5, **dadurch gekennzeichnet, dass** der latente Härter mit Aldiminogruppe(n) der Formel (I) ein Umsetzungsprodukt mit Aldiminogruppe(n) der Formel (V) ist, 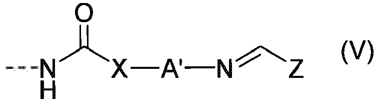 wobei
A' für einen zweiwertigen aliphatischen oder cycloaliphatischen oder arylaliphatischen, gegebenenfalls Ether-Sauerstoff oder Amin-Stickstoff aufweisenden Kohlenwasserstoff-Rest mit einem Molekulargewicht im Bereich von 28 bis 500 g/mol steht, und
X für O oder S oder NR⁰ steht, wobei R⁰ für einen Wasserstoff-Rest oder für einen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder Aldiminogruppe der Formel (I) aufweist.

8. Verwendung gemäss einem der Ansprüche 1 bis 7, **dadurch gekennzeichnet, dass** die Zusammensetzung ein Gemisch aus latenten Härtern mit Aldiminogruppe(n) der Formel (I) enthält, bei welchen Z jeweils für einen Rest der Formel (II) steht und R dabei ausgewählt ist aus linearen oder insbesondere verzweigten Decyl-, Undecyl-, Dodecyl-, Tridecyl- und Tetradecyl-Resten.

9. Verwendung gemäss einem der Ansprüche 1 bis 8, **dadurch gekennzeichnet, dass** die Zusammensetzung mindestens ein Isocyanatgruppenhaltiges Polyurethanpolymer enthält.

10. Verwendung gemäss einem der Ansprüche 1 bis 9, **dadurch gekennzeichnet, dass** die Zusammensetzung zusätzlich mindestens einen Weichmacher enthält.

11. Verwendung gemäss einem der Ansprüche 1 bis 10, **dadurch gekennzeichnet, dass** die Zusammensetzung einkomponentig ist.

12. Klebe- oder Abdichtungs- oder Beschichtungs-Verbund, erhalten aus der Verwendung gemäss einem der Ansprüche 1 bis 11, umfassend
- die gegebenenfalls ausgehärtete Zusammensetzung und
- das an die Zusammensetzung anhaftende Substrat und/oder die an die Zusammensetzung anhaftende Deckschicht.

13. Verbund gemäss Anspruch 12, **dadurch gekennzeichnet, dass** er eine elastische Abdichtung darstellt und
entweder
- ein auf Weichmachermigration empfindliches Substrat,
- die daran anhaftende ausgehärtete Zusammensetzung,
- gegebenenfalls ein an die Zusammensetzung anhaftendes weiteres Substrat, und
- gegebenenfalls eine an die Zusammensetzung anhaftende Deckschicht;
oder
- ein Substrat,
- die daran anhaftende ausgehärtete Zusammensetzung,
- eine an die Zusammensetzung anhaftende Deckschicht, und
- gegebenenfalls ein an die Zusammensetzung anhaftendes weiteres Substrat
umfasst.

14. Verbund gemäss Anspruch 12, **dadurch gekennzeichnet, dass** er eine elastische Verklebung darstellt und
entweder a)
- ein auf Weichmachermigration empfindliches erstes Substrat,
- die daran anhaftende ausgehärtete Zusammensetzung, und
- ein an die Zusammensetzung anhaftendes zweites Substrat;
oder b)
- ein erstes Substrat,
- die daran anhaftende ausgehärtete Zusammensetzung,
- ein an die Zusammensetzung anhaftendes zweites Substrat, und
- eine an die Zusammensetzung anhaftende Deckschicht;
oder c)
- ein erstes Substrat,
- die daran anhaftende ausgehärtete Zusammensetzung,
- eine an die Zusammensetzung anhaftende Deckschicht, und
- ein an die Deckschicht gebundenes zweites Substrat
umfasst.

15. Verbund gemäss Anspruch 12, **dadurch gekennzeichnet, dass** er eine elastische Beschichtung darstellt und
- ein Substrat,
- die daran anhaftende ausgehärtete Zusammensetzung, und
- eine an die Zusammensetzung anhaftende Deckschicht
umfasst.

## Claims

1. Use of a composition comprising
- at least one polyisocyanate and/or at least one polyurethane polymer containing isocyanate groups and
- at least one latent hardener having aldimino group(s) of the formula (I) 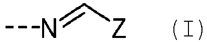 where Z is an aryl radical substituted by an alkyl or alkoxy group and having a total of 12 to 26 carbon atoms,
as elastic adhesive, sealant or coating for at least one substrate and/or at least one outer layer that are sensitive to plasticizer migration, **characterized in that** the substrate is a porous material or a stress crack-forming plastic.

2. Use according to Claim 1, **characterized in that** the porous material is selected from the group consisting of wood, paper, cardboard, gypsum, mortar, fibre cement, concrete and natural stone, and/or **in that** the stress crack-forming plastic is selected from the group consisting of polystyrene, polycarbonate, polyester and polymethylmethacrylate.

3. Use according to either of Claims 1 and 2, **characterized in that** the outer layer is or cures to form a polymeric material.

4. Use according to Claim 3, **characterized in that** the outer layer is a sealing layer or an adhesive layer or a coating or a protective film.

5. Use according to any of Claims 1 to 4, **characterized in that** Z is a radical of the formula (II) 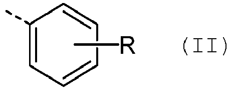 where R is a linear or branched alkyl radical having 10 to 14 carbon atoms.

6. Use according to any of Claims 1 to 5, **characterized in that** the latent hardener having aldimino group(s) of the formula (I) is a polyaldimine of the formula (III) 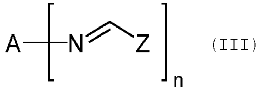 where
n is 2 or 3 and
A is an n-valent hydrocarbyl radical optionally containing ether oxygen and having a molecular weight in the range from 28 to 6'000 g/mol.

7. Use according to any of Claims 1 to 5, **characterized in that** the latent hardener having aldimino group(s) of the formula (I) is a reaction product having aldimino group(s) of the formula (V) 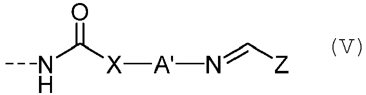 where
A' is a divalent aliphatic or cycloaliphatic or arylaliphatic hydrocarbyl radical optionally containing ether oxygen or amine nitrogen and having a molecular weight in the range from 28 to 500 g/mol,
and
X is O or S or NR⁰ where R⁰ is a hydrogen radical or is a hydrocarbyl radical which has 1 to 30 carbon atoms and optionally contains at least one carboxylic ester, nitrile, nitro, phosphonic ester, sulfone or sulfonic ester group or aldimino group of the formula (I).

8. Use according to any of Claims 1 to 7, **characterized in that** the composition comprises a mixture of latent hardeners having aldimino group(s) of the formula (I) in which each Z is a radical of the formula (II) and R is selected from linear or particularly branched decyl, undecyl, dodecyl, tridecyl and tetradecyl radicals.

9. Use according to any of Claims 1 to 8, **characterized in that** the composition comprises at least one polyurethane polymer containing isocyanate groups.

10. Use according to any of Claims 1 to 9, **characterized in that** the composition additionally comprises at least one plasticizer.

11. Use according to any of Claims 1 to 10, **characterized in that** the composition is a one-component composition.

12. Bonding composite or sealing composite or coating composite obtained from the use according to any of Claims 1 to 11, comprising
- the optionally cured composition and
- the substrate adhering to the composition and/or the outer layer adhering to the composition.

13. Composite according to Claim 12, **characterized in that** it is an elastic seal and comprises
either
- a substrate sensitive to plasticizer migration,
- the cured composition adhering thereon,
- optionally a further substrate adhering to the composition, and
- optionally an outer layer adhering to the composition;
or
- a substrate,
- the cured composition adhering thereon,
- an outer layer adhering to the composition, and
- optionally a further substrate adhering to the composition.

14. Composite according to Claim 12, **characterized in that** it is an elastic adhesive bond and comprises
either a)
- a first substrate sensitive to plasticizer migration,
- the cured composition adhering thereon, and
- a second substrate adhering to the composition;
or b)
- a first substrate,
- the cured composition adhering thereon,
- a second substrate adhering to the composition, and
- an outer layer adhering to the composition;
or c)
- a first substrate,
- the cured composition adhering thereon,
- an outer layer adhering to the composition, and
- a second substrate bonded to the outer layer.

15. Composite according to Claim 12, **characterized in that** it is an elastic coating and comprises
- a substrate,
- the cured composition adhering thereon, and
- an outer layer adhering to the composition.

## Revendications

1. Utilisation d'une composition comprenant
- au moins un polyisocyanate et/ou au moins un polymère de polyuréthane contenant des groupes isocyanate et
- au moins un durcisseur latent comportant un ou plusieurs groupes aldimino de formule (I), 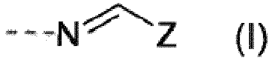 dans laquelle Z représente un radical aryle ayant en tout 12 à 26 atomes de carbone, substitué par un groupe alkyle ou alcoxy,
en tant qu'adhésif, matériau d'étanchéité ou revêtement élastique pour au moins un substrat et/ou au moins une couche de finition, qui sont sensibles à une migration du plastifiant, **caractérisée en ce que** le substrat est un matériau poreux ou un plastique formant des fissures de contrainte.

2. Utilisation selon la revendication 1, **caractérisée en ce que** le matériau poreux est choisi dans le groupe consistant en le bois, le papier, le carton, le plâtre, le mortier, le ciment fibreux, le béton et la pierre naturelle, et/ou **en ce que** le plastique formant des fissures de contrainte est choisi dans le groupe consistant en le polystyrène, le polycarbonate, le polyester et le poly(méthacrylate de méthyle).

3. Utilisation selon l'une des revendications 1 à 2, **caractérisée en ce que** la couche de finition est un matériau polymère ou en est constituée.

4. Utilisation selon la revendication 3, **caractérisée en ce que** la couche de finition est une couche d'étanchéification ou une couche adhésive ou un revêtement ou une feuille de protection.

5. Utilisation selon l'une des revendications 1 à 4, **caractérisée en ce que** Z représente un radical de formule (II), 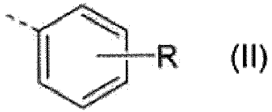 dans laquelle R représente un radical alkyle linéaire ou ramifié ayant 10 à 14 atomes de carbone.

6. Utilisation selon l'une des revendications 1 à 5, **caractérisée en ce que** le durcisseur latent comportant un ou plusieurs groupes aldimino de formule (I) est une polyaldimine de formule (III), 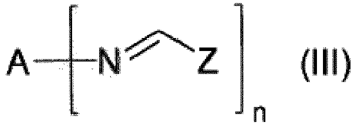 dans laquelle
n représente 2 ou 3 et
A représente un radical hydrocarboné n-valent, comportant éventuellement un oxygène d'éther, ayant une masse moléculaire dans la plage de 28 à 6 000 g/mol.

7. Utilisation selon l'une des revendications 1 à 5, **caractérisée en ce que** le durcisseur latent comportant un ou plusieurs groupes aldimino de formule (I) est un produit de réaction avec un ou plusieurs groupes aldimino de formule (V), 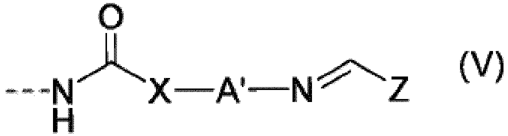 dans laquelle
A' représente un radical hydrocarboné divalent, aliphatique ou cycloaliphatique ou arylaliphatique, comportant éventuellement un oxygène d'éther ou un azote d'amine, ayant une masse moléculaire dans la plage de 28 à 500 g/mol, et
X représente O ou S ou NR⁰, R⁰ représentant un radical hydrogène ou un radical hydrocarboné ayant 1 à 30 atomes de carbone, qui comprend éventuellement au moins un groupe ester d'acide carboxylique, nitrile, nitro, ester d'acide phosphonique, sulfo ou ester d'acide sulfonique ou un groupe aldimino de formule (I).

8. Utilisation selon l'une des revendications 1 à 7, **caractérisée en ce que** la composition contient un mélange de durcisseurs latents comportant un ou plusieurs groupes aldimino de formule (I), dans laquelle chaque Z représente un radical de formule (II) et R est alors choisi parmi les radicaux décyle, undécyle, dodécyle, tridécyle et tétradécyle linéaires ou en particulier ramifiés.

9. Utilisation selon l'une des revendications 1 à 8, **caractérisée en ce que** la composition contient au moins un polymère de polyuréthane contenant des groupes isocyanate.

10. Utilisation selon l'une des revendications 1 à 9, **caractérisée en ce que** la composition contient en outre au moins un plastifiant.

11. Utilisation selon l'une des revendications 1 à 10, **caractérisée en ce que** la composition est monocomposant.

12. Composite adhésif ou d'étanchéification ou de revêtement, obtenu par l'utilisation selon l'une des revendications 1 à 11, comprenant
- la composition éventuellement durcie et
- le substrat adhérant à la composition et/ou la couche de finition adhérant à la composition.

13. Composite selon la revendication 12, **caractérisé en ce qu'**il représente une étanchéification élastique et comprend
soit
- un substrat sensible à la migration des plastifiants,
- la composition durcie adhérant à ce dernier,
- éventuellement un autre substrat adhérant à la composition, et
- éventuellement une couche de finition adhérant à la composition ;
soit
- un substrat,
- la composition durcie adhérant à ce dernier,
- une couche de finition adhérant à la composition, et
- éventuellement un autre substrat adhérant à la composition.

14. Composite selon la revendication 12, **caractérisé en ce qu'**il représente un collage élastique et comprend
soit a)
- un premier substrat sensible à la migration des plastifiants,
- la composition durcie adhérant à ce dernier, et
- un second substrat adhérant à la composition ;
soit b)
- un premier substrat,
- la composition durcie adhérant à ce dernier,
- un second substrat adhérant à la composition, et
- une couche de finition adhérant à la composition ;
soit c)
- un premier substrat,
- la composition durcie adhérant à ce dernier,
- une couche de finition adhérant à la composition, et
- un second substrat lié à la couche de finition.

15. Composite selon la revendication 12, **caractérisé en ce qu'**il représente un revêtement élastique et comprend
- un substrat,
- la composition durcie adhérant à ce dernier, et
- une couche de finition adhérant à la composition.
